# EUROPEAN PATENT APPLICATION

(11) **EP 3 459 916 A1**
(43) Date of publication of application: **27.03.2019**
(21) Application number: 17799477.9
(22) Date of filing: 18.05.2017
(51) Int. Cl.: C03C 27/12, B32B 7/02, B32B 17/10, B60J 1/00, C08K 5/10, C08L 21/00, C08L 23/08, C08L 23/26, C08L 29/14

(54) **LAMINATED GLASS INTERLAYER AND LAMINATED GLASS**

(30) Priority: 18.05.2016 JP 2016099898
(71) Applicant: Kuraray Co., Ltd., Okayama 710-0801 (JP)
(72) Inventor: ISOUE, Koichiro, Kurashiki-shi Okayama 713-8550 (JP)
(74) Representative: Müller-Boré & Partner Patentanwälte PartG mbB
(86) International application number: PCT/JP2017/018722
(87) International publication number: WO 2017/200053

(57) **Abstract**

A first object of the invention is to provide an interlayer film for laminated glass, which can brighten the entire room by suppressing reduction of the amount of solar light penetrating through a laminated glass and efficiently diffusing the penetrated light, and a laminated glass using the interlayer film. A second object of the invention is to provide a production method for recycling a trim or an out-of-specification product of an interlayer film for laminated glass, the interlayer film using a polyvinyl acetal resin layer and a thermoplastic elastomer layer, and thereby obtaining an interlayer film for laminated glass having secured light transmission properties and light scattering properties.

The invention relates to an interlayer film for laminated glass having layer A containing a polyvinyl acetal resin, in which a thermoplastic elastomer is dispersed in layer A, and in the case of producing a laminated glass using the interlayer film, the laminated glass has a haze of 10% or higher and a total light transmittance of 80% or higher.

## Description

### Technical Field

The present invention relates to an interlayer film for laminated glass, and a laminated glass using the same.

### Background Art

In a case in which an interlayer film for laminated glass is transparent, the light that has penetrated through the laminated glass tends to proceed straight without being diffused. Therefore, in a room furnished with a laminated glass, places that are likely to be locally illuminated and places that are likely to be shaded occur.

On the other hand, in a case in which an interlayer film for laminated glass is translucent, the light that has penetrated through the laminated glass is likely to be diffused in a room furnished with a laminated glass. Therefore, in a room furnished with a laminated glass, places that are likely to be locally illuminated and places that are likely to be shaded do not readily occur, and thus, the entire room can be brightened.

Regarding a translucent interlayer film for laminated glass, for example, an interlayer film for laminated glass obtained by mixing a polyvinyl butyral resin with inorganic microparticles (see, for example, Patent Literature 1) and an interlayer film for laminated glass obtained by mixing a polyvinyl butyral resin with a silicone-based water repellent (see, for example, Patent Literature 2) have been suggested.

Meanwhile, regarding an interlayer film for laminated glass having sound insulation performance, a three-layer laminated interlayer film of plasticized PVB has been conventionally used. Recently, there is a demand for an interlayer film having superior sound insulation performance, and a laminate of a polyvinyl butyral resin and a thermoplastic elastomer (see, for example, Patent Literature 3), and the like have been suggested.

### Citation List

### Patent Literature

Patent Literature 1: JP 2009/035081 A1
Patent Literature 2: JP H07-309642 A
Patent Literature 3: JP 2007-91491 A

### Summary of Invention

### Technical Problem

However, the interlayer film for laminated glass described in Patent Literature 1 has a problem that the total light transmittance becomes insufficient due to the influence of inorganic microparticles. Furthermore, the interlayer film for laminated glass described in Patent Literature 2 has a problem that due to very high haze (fog value) in addition to insufficient total light transmittance, the feeling of transparency intrinsic to glass is lost.

However, depending on the method for producing the interlayer film for laminated glass, a trim may be generated, or an out-of-specification product having non-uniform composition or thickness may be obtained. Such a trim or out-of-specification product can be generally recycled by melt-kneading the product and subjecting the resultant to extrusion molding. However, with regard to the trim, out-of-specification product, and the like of the laminated sound insulating film described in Patent Literature 3, there is no method of effectively recycling such a product because of low compatibility of the various layers, and all products must be disposed of.

The present invention is to solve the problems described above. That is, a first object of the present invention is to provide an interlayer film for laminated glass, which can brighten the entire room by suppressing reduction of the amount of solar light penetrating through a laminated glass and efficiently diffusing the penetrated light, and a laminated glass using the interlayer film.

Moreover, it is a second object of the present invention to provide a production method for recycling a trim or an out-of-specification product of an interlayer film for laminated glass, the interlayer film using a layer containing one or more resins selected from the group consisting of a polyvinyl acetal resin, an ionomer resin, and an ethylene-vinyl acetate copolymer resin; and a layer containing a thermoplastic elastomer, and thereby obtaining an interlayer film for laminated glass having secured light transmission properties and light scattering properties.

### Solution to Problem

According to the present invention, the above objects are achieved by providing:
[1] an interlayer film for laminated glass, comprising layer A containing one or more resins selected from the group consisting of a polyvinyl acetal resin, an ionomer resin, and an ethylene-vinyl acetate copolymer resin; and a thermoplastic elastomer,
   wherein the thermoplastic elastomer is dispersed in layer A, and
   when a laminated glass is produced by disposing the interlayer film for laminated glass between two sheets of float glass having a thickness of 3 mm, the laminated glass has a haze of 10% or higher and a total light transmittance of 80% or higher;
[2] the interlayer film for laminated glass according to [1], wherein a glass transition temperature of the thermoplastic elastomer is 10°C or lower;
[3] the interlayer film for laminated glass according to [1] or [2], wherein a content of the thermoplastic elastomer with respect to 100 parts by mass of the resin in layer A is less than 100 parts by mass;
[4] the interlayer film for laminated glass according to any one of [1] to [3], wherein a temperature of a maximum peak of the tan δ measured by performing a complex shear viscosity test for the thermoplastic elastomer according to JIS K 7244-10 under the conditions of a frequency of 1 Hz is -50°C to 25°C;
[5] the interlayer film for laminated glass according to any one of [1] to [4], wherein layer A contains a plasticizer having a hydroxyl group;
[6] the interlayer film for laminated glass according to any one of [1] to [5], comprising layer B on at least one surface of layer A, layer B being different from layer A;
[7] the interlayer film for laminated glass according to [6], comprising layer B on both surfaces of layer A;
[8] the interlayer film for laminated glass according to [6] or [7], wherein layer B contains one or more resins selected from the group consisting of a polyvinyl acetal resin, an ionomer-based resin, and an ethylene-vinyl acetate copolymer resin;
[9] the interlayer film for laminated glass according to any one of [1] to [5], comprising layer C between two layers of layer A, layer C being different from layer A;
[10] the interlayer film for laminated glass according to [9], wherein layer C contains a thermoplastic elastomer;
[11] the interlayer film for laminated glass according to any one of [1] to [11], wherein the thermoplastic elastomer is a styrene/diene based elastomer or an acrylic elastomer;
[12] the interlayer film for laminated glass according to any one of [1] to [11], wherein the thermoplastic elastomer has a refractive index of 1.490 to 2.000;
[13] the interlayer film for laminated glass according to any one of [1] to [12], wherein layer A contains a functional group-containing polyolefinic polymer;
[14] a laminated glass comprising the interlayer film for laminated glass according to any one of [1] to [13];
[15] a method for producing the interlayer film for laminated glass according to any one of [1] to [14], the method comprising:
   a step of producing layer A by melt-kneading a laminated interlayer film having at least one layer of each of a layer containing a thermoplastic elastomer and a layer containing a resin selected from the group consisting of a polyvinyl acetal resin, an ionomer resin, and an ethylene-vinyl acetate copolymer.

### Advantageous Effects of Invention

According to the present invention, as a first effect, an interlayer film for laminated glass capable of suppressing reduction of the amount of solar light penetrating through a laminated glass and also capable of brightening an entire room by efficiently diffusing the penetrated light; and a laminated glass using the interlayer film can be provided.

Furthermore, as a second effect of the present invention, an interlayer film for laminated glass using a layer containing one or more resins selected from the group consisting of a polyvinyl acetal resin, an ionomer resin, and an ethylene-vinyl acetate copolymer resin; and a layer containing a thermoplastic elastomer, the interlayer film for laminated glass having secured light transmission properties and light scattering properties, can be obtained by recycling a trim or an out-of-specification product of the interlayer film for laminated glass.

### Brief Description of Drawings

Fig. 1 is an example of a cross-sectional view of the configuration of an interlayer film for laminated glass.
Fig. 2 is an example of a cross-sectional view of the configuration of an interlayer film for laminated glass.
Fig. 3 is an example of a cross-sectional view of the configuration of an interlayer film for laminated glass.

### Description of Embodiments

In the following description, embodiments of the present invention will be explained; however, the present invention is not intended to be limited to the present embodiments.

### [Layer A]

The present invention relates to an interlayer film for laminated glass, the interlayer film having layer A containing one or more resins selected from the group consisting of a polyvinyl acetal resin, an ionomer resin, and an ethylene-vinyl acetate copolymer resin; and a thermoplastic elastomer.

By incorporating one or more resins selected from the group consisting of a polyvinyl acetal resin, an ionomer resin, and an ethylene-vinyl acetate copolymer resin into layer A, the weather resistance or strength of the interlayer film for laminated glass can be enhanced, or the adhesiveness between the interlayer film for laminated glass and a glass can be enhanced. Furthermore, when the interlayer film for laminated glass is practicalized, a safety glass from which glass does not readily scatter even if damaged, can be obtained.

### (Polyvinyl acetal resin)

The content of a vinyl acetate unit in the polyvinyl acetal resin is preferably 30 mol% or less. When the content of the vinyl acetate unit is more than 30 mol%, blocking is likely to occur at the time of producing the polyvinyl acetal resin, and therefore, production may proceed with difficulties. The content of the vinyl acetate unit is more preferably 20 mol% or less, and even more preferably 5 mol% or less.

The average content of a vinyl alcohol unit in the polyvinyl acetal resin is preferably 15 mol% or more, more preferably 20 mol% or more, and even more preferably 25 mol% or more. When the average content of the vinyl alcohol unit is less than 15 mol%, the production cost for the polyvinyl acetal resin tends to increase, the rupture strength of the interlayer film thus obtainable tends to decrease, or the adhesiveness between layer A and glass tends to decrease.

The average content of the vinyl alcohol unit in the polyvinyl acetal resin is preferably 40 mol% or less, more preferably 35 mol% or less, and even more preferably 30 mol% or less. When the average content of the vinyl alcohol unit is more than 40 mol%, in a case in which a plasticizer is incorporated into layer A, compatibility between the polyvinyl acetal resin and the plasticizer is decreased, and problems such as bleed-out may occur. Furthermore, the hygroscopic properties of layer A tend to increase, and layer A tends to be easily whitened or detached from glass.

The polyvinyl acetal resin is usually composed of a vinyl acetal unit, a vinyl alcohol unit, and a vinyl acetate unit, and the respective amounts of these units can be measured according to, for example, JIS K 6728 " Testing method for polyvinyl butyral" or a nuclear magnetic resonance (NMR) method.

In a case in which the polyvinyl acetal resin includes a constituent unit other than the vinyl acetal unit, the amount of the unit other than the vinyl acetal unit can be calculated by measuring the amount of the vinyl alcohol unit and the amount of the vinyl acetate unit, and subtracting the amounts of these two units from the amount of the vinyl acetal unit assumed in the case of not including any constituent unit other than the vinyl acetal unit.

A polyvinyl acetal resin can be produced by a conventionally known method, and representatively, a polyvinyl acetal resin can be produced by acetalizing polyvinyl alcohol using an aldehyde. Specifically, a method of obtaining a powder of a polyvinyl acetal resin by dissolving polyvinyl alcohol in warm water; maintaining an aqueous solution thus obtained at a predetermined temperature, for example, 0°C or higher, preferably 5°C or higher, and 90°C or lower, and preferably 20°C or lower; adding an acid catalyst and an aldehyde compound as needed to the aqueous solution; performing an acetalization reaction while stirring the system; raising the reaction temperature to 40°C to 80°C to induce aging; subsequently terminating the reaction, and then performing neutralization, washing with water, and drying, may be adopted.

Regarding the viscosity average degree of polymerization of the polyvinyl alcohol that serves as a raw material of the polyvinyl acetal resin, in a case in which the amount of the plasticizer is less than 25 parts by mass with respect to 100 parts by mass of the polyvinyl acetal resin, the viscosity average degree of polymerization is 500 or greater, and more preferably 900 or greater. In a case in which the amount of the plasticizer is 25 parts by mass or more, the viscosity average degree of polymerization is more preferably 1,000 or greater, and even more preferably 1,500 or greater. If the viscosity average degree of polymerization of the polyvinyl alcohol is too low, penetration resistance and creep resistance, particularly creep resistance under high-temperature and high-humidity conditions such as 85°C and 85% RH, may be deteriorated. Furthermore, regarding the viscosity average degree of polymerization of the polyvinyl alcohol, in a case in which the amount of the plasticizer is 25 parts by mass or more with respect to 100 parts by mass of the polyvinyl acetal resin, the viscosity average degree of polymerization is preferably 5,000 or less, more preferably 3,000 or less, even more preferably 2,500 or less, particularly preferably 2,300 or less, and most preferably 2,000 or less. In a case in which the amount of the plasticizer is less than 25 parts by mass, the viscosity average degree of polymerization is preferably 2,000 or less, more preferably 1,800 or less, and even more preferably 1,500 or less. If the viscosity average degree of polymerization of the polyvinyl alcohol is too high, formation of the resin film may become difficult.

According to JIS K 6728, since the viscosity average degree of polymerization of the polyvinyl acetal resin coincides with the viscosity average degree of polymerization of the polyvinyl alcohol that serves as a raw material, a preferred viscosity average degree of polymerization of the polyvinyl alcohol described above coincides with a preferred viscosity average degree of polymerization of the polyvinyl acetal resin.

Since the amount of the vinyl acetate unit of the polyvinyl acetal resin thus obtainable is preferably set to 30 mol% or less, it is preferable to use a polyvinyl alcohol having a degree of saponification of 70 mol% or higher. When the degree of saponification of the polyvinyl alcohol is lower than 70 mol%, heat resistance of the resin may decrease, and the reactivity between the polyvinyl alcohol and the aldehyde compound may also decrease. The degree of saponification is more preferably 80 mol% or higher, and even more preferably 95 mol% or higher.

The viscosity average degree of polymerization and the degree of saponification of the polyvinyl alcohol can be measured based on, for example, JIS K 6726 " Testing method for polyvinyl alcohol".

The aldehyde compound used for acetalization of the polyvinyl alcohol is preferably an aldehyde having carbon number of 1 or more and 12 or less. When the carbon number of the aldehyde exceeds 12, the reactivity of acetalization decreases, and blocks of a polyvinyl acetal resin is likely to occur during the reaction. Thus, it is likely to have difficulties in the synthesis of the polyvinyl acetal resin.

Examples of the type of the aldehyde compound include aliphatic, aromatic, and alicyclic aldehydes such as formaldehyde, acetaldehyde, propionaldehyde, n-butylaldehyde, isobutylaldehyde, valeraldehyde, isovaleraldehyde, n-hexylaldehyde, 2-ethylbutylaldehyde, n-heptylaldehyde, n-octylaldehyde, 2-ethylhexylaldehyde, n-nonylaldehyde, n-decylaldehyde, benzaldehyde, and cinnamaldehyde. Among these, an aliphatic aldehyde having carbon number of 2 or more and 6 or less is preferred, and above all, butylaldehyde is particularly preferred. Furthermore, the aldehydes described above may be used alone, or two or more types thereof may be used in combination. Furthermore, it is also acceptable to use a multifunctional aldehyde, an aldehyde having a different functional group, and the like in combination in a small amount in the range of 20% by mass or less with respect to all the aldehydes.

Regarding the polyvinyl acetal resin, a polyvinyl butyral resin is most preferred; however, regarding the polyvinyl butyral resin, a modified polyvinyl butyral resin obtained by subjecting a polyvinyl alcohol-based polymer obtainable by saponifying a copolymer of a vinyl ester and another monomer to butyralization using butylaldehyde, can be used. Here, examples of the other monomer include α-olefins such as ethylene, propylene, n-butene, and isobutylene; acrylic acid and salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide; acrylamide derivatives such as N-methylacrylamide, N-ethylacrylamide, N,N-dimethylacrylamide, diacetone acrylamide, acrylamidopropanesulfonic acid and salts thereof, acrylamidopropyldimethylamine and salts thereof or quaternary salts thereof, and N-methylolacrylamide, and derivatives thereof; methacrylamide derivatives such as methacrylamide, N-methylmethacrylamide, N-ethylmethacrylamide, methacrylamidopropanesulfonic acid and salts thereof, methacrylamidopropyldimethylamine and salts thereof or quaternary salts thereof, and N-methylolmethacrylamide and derivatives thereof; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; unsaturated dicarboxylic acids such as maleic acid, itaconic acid, and fumaric acid, and salts thereof, esters thereof, or anhydrides thereof; vinylsilyl compounds such as vinyltrimethoxysilane; and isopropenyl acetate. In addition to those, products obtained by modifying a polyvinyl alcohol-based polymer or a polyacetal resin, which serves as a raw material, using a graft reaction or another modification reaction can be used.

### (Ionomer resin)

Regarding the type of the ionomer resin, for example, a resin having an ethylene-derived constituent unit and an α,β-unsaturated carboxylic acid-derived constituent unit, in which at least a portion of the a,β-unsaturated carboxylic acid has been neutralized by metal ions, may be used. Examples of the metal ions include sodium ion and magnesium ion. The percentage content of the α,β-unsaturated carboxylic acid constituent unit with respect to the ethylene-α,β-unsaturated carboxylic acid copolymer that becomes a base polymer is preferably 2% by mass or more, and more preferably 5% by mass or more. The percentage content of the α,β-unsaturated carboxylic acid constituent unit is preferably 30% by mass or less, and more preferably 20% by mass or less. According to the present invention, from the viewpoint of easy availability, an ionomer resin of an ethylene-acrylic acid copolymer and an ionomer resin of an ethylene-methacrylic acid copolymer are preferred. Regarding examples of an ethylene-based ionomer, a sodium ionomer or a magnesium ionomer of an ethylene-acrylic acid copolymer and a sodium ionomer or a magnesium ionomer of an ethylene-methacrylic acid copolymer may be mentioned as particularly preferred examples.

Examples of the α,β-unsaturated carboxylic acid that constitutes the ionomer resin include acrylic acid, methacrylic acid, maleic acid, monomethyl maleate, monoethyl maleate, and maleic anhydride; however, acrylic acid or methacrylic acid is particularly preferred.

### (Ethylene-vinyl acetate copolymer resin)

In regard to the ethylene-vinyl acetate copolymer resin, the proportion of the vinyl acetate moiety with respect to the sum of the ethylene moiety and the vinyl acetate moiety is preferably less than 50 mol%, more preferably less than 30 mol%, even more preferably less than 20 mol%, and preferably less than 15 mol%. When the proportion of the vinyl acetate moiety with respect to the sum of the ethylene moiety and the vinyl acetate moiety is less than 50 mol%, the mechanical strength and flexibility required by the interlayer film for laminated glass tend to be suitably exhibited.

### (Thermoplastic elastomer)

With regard to layer A for the interlayer film for laminated glass of the present invention, by dispersing a thermoplastic elastomer in a continuous phase of one or more resins selected from the group consisting of a polyvinyl acetal resin, an ionomer resin, and an ethylene-vinyl acetate copolymer resin (hereinafter, may be collectively referred to as polyvinyl acetal resin and the like), both high total light transmittance and satisfactory light diffusibility can be achieved, and impact resistance, rupture elongation, rupture strength, and rupture energy can be increased. Particularly, in a case in which the content of the plasticizer in layer A is small, penetration resistance of the laminated glass is enhanced.

A thermoplastic elastomer is a polymer compound that is softened when heated, thereby exhibiting plasticity, and is solidified when cooled, thereby exhibiting rubber elasticity. For example, it is more preferable to use natural rubber, an isoprene rubber, a butadiene rubber, a chloroprene rubber, a nitrile rubber, a butyl rubber, an ethylene-propylene rubber, a urethane rubber, a silicone rubber, a chlorosulfonated polyethylene rubber, an acrylic rubber, a fluororubber, or a block copolymer having a hard segment and a soft segment.

Examples of the type of the block copolymer having a hard segment and a soft segment include a styrene/diene based elastomer (soft segment: a polydiene such as polybutadiene, polyisoprene, a copolymer of butadiene and isoprene, or a hydrogenation product (hereinafter, may be simply referred to as "hydrogenated"), or the like/hard segment: polystyrene or the like), an acrylic elastomer (soft segment: polyacrylate or the like/hard segment: polymethacrylate or the like), a polypropylene/polyethylene-based elastomer (soft segment: ethylene-propylene rubber/hard segment: polypropylene), a polyvinyl chloride-based elastomer (soft segment: polyvinyl chloride/hard segment: polyvinyl chloride), a polyurethane-based elastomer (soft segment: polyether or polyester/hard segment: polyurethane), a polyester-based elastomer (soft segment: polyether/hard segment: polyester), a polyamide-based elastomer (soft segment: polypropylene glycol, polytetramethylene ether glycol, or a polyester-based or polyether-based/hard segment: polyamide <nylon resin>), and a polybutadiene-based elastomer (soft segment: amorphous butyl rubber/hard segment: syndiotactic 1,2-polybutadiene resin). Meanwhile, the thermoplastic elastomers described above may be used alone, or two or more types thereof may be used in combination.

Among the thermoplastic elastomers described above, a styrene/diene based elastomer or an acrylic elastomer, both having appropriate affinity with the polyvinyl acetal resin or the like, is preferred. Regarding the styrene / diene based elastomer, a compound having a polystyrene block and a polydiene-based block is particularly preferred, and regarding the acrylic elastomer, a compound having a polymethacrylate block and a polyacrylate block is particularly preferred.

In a case in which a styrene/diene based elastomer, that is, a copolymer of an aromatic vinyl polymer block and a vinyl polymer block or a conjugated diene polymer block, for example, a block copolymer having an aromatic vinyl polymer block and an aliphatic unsaturated hydrocarbon polymer block (hereinafter, may be simply referred to as "block copolymer"), is used as the thermoplastic elastomer, the bonding form of these polymer blocks is not particularly limited and may be any one of a linear form, a branched form, a radial form, and a bonding form combining two or more of these. However, a linear bonding form is preferred.

Examples of the linear bonding form include, when an aromatic vinyl polymer block is denoted as a, and an aliphatic unsaturated hydrocarbon polymer block is denoted as b, a diblock copolymer represented by a-b; a triblock copolymer represented by a-b-a or b-a-b; a tetrablock copolymer represented by a-b-a-b; a pentablock copolymer represented by a-b-a-b-a or b-a-b-a-b; an (a-b)nX type copolymer (wherein X represents a coupling residue, and n represents an integer of 2 or greater); and mixtures thereof. Among these, a diblock copolymer or a triblock copolymer is preferred, and the triblock copolymer is more preferably a triblock copolymer represented by a-b-a.

The total amount of the aromatic vinyl monomer unit and the aliphatic unsaturated hydrocarbon monomer unit in the block copolymer is preferably 80% by mass or more, more preferably 95% by mass or more, and even more preferably 98% by mass or more, with respect to all of the monomer units. Meanwhile, the aliphatic unsaturated hydrocarbon polymer block in the block copolymer may be a block that has been partially or entirely hydrogenated.

The content of the aromatic vinyl monomer unit in the block copolymer is preferably 30% by mass or less, more preferably 25% by mass or less, and even more preferably 22% by mass or less, with respect to all of the monomer units of the block copolymer. The content of the aromatic vinyl monomer unit is more preferably 5% by mass or more, even more preferably 8% by mass or more, and particularly preferably 12% by mass or more. When the content of the aromatic vinyl monomer unit in the block copolymer is less than 5% by mass, handleability tends to become poor. When the content of the aromatic vinyl monomer unit in the block copolymer is more than 30% by mass, impact resistance tends to deteriorate.

The aromatic vinyl polymer block may have a monomer other than the aromatic vinyl monomer copolymerized therein, to the extent that the effects of the present invention are not impaired. The proportion of the aromatic vinyl monomer unit in the aromatic vinyl polymer block is preferably 80% by mass or more, more preferably 95% by mass or more, and even more preferably 98% by mass or more, with respect to all of the monomer units in the aromatic vinyl polymer block.

Examples of the aromatic vinyl monomer that constitutes the aromatic vinyl polymer block include styrene; alkylstyrenes such as α-methylstyrene, 2-methylstyrene, 3-methylstyrene, 4-methylstyrene, 4-propylstyrene, 4-cyclohexylstyrene, and 4-dodecylstyrene; arylstyrenes such as 2-ethyl-4-benzylstyrene, 4-(phenylbutyl)styrene, 1-vinylnaphthalene, and 2-vinylnaphthalene; halogenated styrenes; alkoxystyrenes; and vinylbenzoic acid esters. These may be used alone, or two or more types thereof may be used in combination.

The content of the aliphatic unsaturated hydrocarbon monomer unit in the block copolymer is preferably 60% by mass or more, more preferably 70% by mass or more, and even more preferably 80% by mass or more, with respect to all of the monomer units of the block copolymer. The content of the aliphatic unsaturated hydrocarbon monomer unit is preferably 95% by mass or less, more preferably 90% by mass or less, and even more preferably 88% by mass or less, with respect to all of the monomer units of the block copolymer. When the content of the aliphatic unsaturated hydrocarbon monomer unit in the block copolymer is less than 60% by mass, there is a tendency that the characteristics as a thermoplastic elastomer are not readily exhibited. When the content of the aliphatic unsaturated hydrocarbon monomer unit in the block copolymer is more than 95% by mass, handleability tends to deteriorate. The content of the aliphatic unsaturated hydrocarbon monomer unit in the block copolymer can be determined from the feed ratio of the various monomers used at the time of synthesizing the block copolymer, and the measurement results of ¹H-NMR and the like of the block copolymer.

The aliphatic unsaturated hydrocarbon polymer block may have a monomer other than the aliphatic unsaturated hydrocarbon monomer copolymerized therein, to the extent that the effects of the present invention are not impaired. The proportion of the aliphatic unsaturated hydrocarbon monomer unit in the aliphatic unsaturated hydrocarbon polymer block is preferably 80% by mass or more, more preferably 95% by mass or more, and even more preferably 98% by mass or more, with respect to all of the monomer units in the aliphatic unsaturated hydrocarbon polymer block.

Examples of the aliphatic unsaturated hydrocarbon monomer that constitutes the aliphatic unsaturated hydrocarbon polymer block include ethylene, propylene, 1-butene, 1-pentene, 1-hexene, 1-heptene, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-pentene, 3-methyl-1-hexene, 4-methyl-1-hexene, 5-methyl-1-hexene, 3,3-dimethyl-1-pentene, 3,4-dimethyl-1-pentene, 4,4-dimethyl-1-pentene, vinylcyclohexane, hexafluoropropene, tetrafluoroethylene, 2-fluoropropene, fluoroethylene, 1,1-difluoroethylene, 3-fluoropropene, trifluoroethylene, 3,4-dichloro-1-butene, butadiene, isoprene, dicyclopentadiene, norbornene, and acetylene. These may be used alone or in combination of two or more types thereof.

From the viewpoints of easy availability and handleability, the aliphatic unsaturated hydrocarbon monomer is preferably an aliphatic unsaturated hydrocarbon having carbon number of 2 or more, and more preferably an aliphatic hydrocarbon having carbon number of 4 or more. An aliphatic unsaturated hydrocarbon having carbon number of 12 or less is preferred, and an aliphatic hydrocarbon having carbon number of 8 or less is more preferred. Furthermore, from the viewpoints of easy availability, handleability, and easy synthesis, the aliphatic unsaturated hydrocarbon monomer is preferably a conjugated diene. Above all, it is preferable to use butadiene or isoprene, and it is more preferable to use butadiene and isoprene in combination.

From the viewpoint of enhancing thermal stability and photostability, in the case of using a conjugated diene as a constituent unit of the aliphatic unsaturated hydrocarbon polymer block, it is preferable that the conjugated diene is a hydrogenation product that has been partially or entirely hydrogenated. The hydrogenation ratio at that time is preferably 80% or higher, and more preferably 90% or higher. Here, the hydrogenation ratio is a value obtainable by measuring the iodine values of the block copolymer before and after a hydrogenation reaction.

The weight average molecular weight of the block copolymer is, from the viewpoints of the mechanical characteristics and molding processability of the block copolymer, preferably 30,000 or more, and more preferably 50,000 or more, and the weight average molecular weight is preferably 400,000 or less, and more preferably 300,000 or less. The ratio of the weight average molecular weight and the number average molecular weight (Mw/Mn) of the block copolymer is preferably 1.0 or greater, and the ratio is preferably 2.0 or less, and more preferably 1.5 or less. Here, the weight average molecular weight is a weight average molecular weight in terms of polystyrene determined by gel permeation chromatography (GPC) measurement, and the number average molecular weight is a number average molecular weight in terms of polystyrene determined by GPC measurement.

Regarding the method for producing the block copolymer, for example, production can be carried out by an anionic polymerization method, a cationic polymerization method, or a radical polymerization method. For example, in the case of anionic polymerization, specifically,
(i) a method in which an alkyllithium compound as an initiator, an aromatic vinyl monomer, a conjugated diene monomer, and then an aromatic vinyl monomer are polymerized in this order;
(ii) a method in which an alkyllithium compound as an initiator, an aromatic vinyl monomer and a conjugated diene monomer are polymerized in this order, and then performing coupling by adding a coupling agent; and
(iii) a method in which a dilithium compound as an initiator, a conjugated diene monomer and then an aromatic vinyl monomer are polymerized in this order, may be mentioned.

In the case of using a conjugated diene as the aliphatic unsaturated hydrocarbon monomer, the amount of a 1,2-bond and the amount of a 3,4-bond of the thermoplastic elastomer can be increased by adding an organic Lewis base at the time of anionic polymerization, and the amount of the 1,2-bond and the amount of the 3,4-bond of the thermoplastic elastomer can be easily controlled by the amount of addition of the organic Lewis base.

Examples of the organic Lewis base include esters such as ethyl acetate; amines such as triethylamine, N,N,N',N'-tetramethylethylenediamine (TMEDA), and N-methylmorpholine; nitrogen-containing heterocyclic aromatic compounds such as pyridine; amides such as dimethylacetamide; ethers such as dimethyl ether, diethyl ether, tetrahydrofuran (THF), and dioxane; glycol ethers such as ethylene glycol dimethyl ether and diethylene glycol dimethyl ether; sulfoxides such as dimethyl sulfoxide; and ketones such as acetone and methyl ethyl ketone.

In the case of subjecting an unhydrogenated polystyrene-based elastomer to a hydrogenation reaction, the reaction can be carried out by dissolving an unhydrogenated polystyrene-based elastomer thus obtained in a solvent that is inert to a hydrogenation catalyst, or using an unhydrogenated polystyrene-based elastomer directly without isolating the elastomer from the reaction liquid, and reacting the elastomer with hydrogen in the presence of a hydrogenation catalyst.

Examples of the hydrogenation catalyst include Raney nickel; a heterogeneous catalyst obtained by supporting a metal such as Pt, Pd, Ru, Rh, or Ni on a simple substance such as carbon, alumina, or diatomaceous earth; a Ziegler catalyst including a combination of a transition metal compound, an alkylaluminum compound, an alkyllithium compound, and the like; and a metallocene catalyst. The hydrogenation reaction can be carried out usually under the conditions of a hydrogen pressure of 0.1 MPa or more and 20 MPa or less, a reaction temperature of 20°C or higher and 250°C or lower, and a reaction time of 0.1 hour or more and 100 hours or less.

The glass transition temperature of the thermoplastic elastomer is preferably -50°C or higher, more preferably -35°C or higher, and even more preferably -20°C or higher. When the glass transition temperature of the thermoplastic elastomer is below -50°C, the sound insulation properties near room temperature of the laminated sound insulating film before recycling tend to deteriorate.

The glass transition temperature of the thermoplastic elastomer is preferably 10°C or lower, more preferably 0°C or lower, even more preferably -5°C or lower, and particularly preferably -10°C or lower. When the glass transition temperature of the thermoplastic elastomer is higher than 10°C, the sound insulation properties near room temperature of the laminated sound insulating film before recycling, and the impact resistance of layer A tend to deteriorate. In a case in which the glass transition temperature of the thermoplastic elastomer is 10°C or lower, and particularly in a case in which the content of the plasticizer in layer A is small, the penetration resistance of the laminated glass is enhanced.

Regarding a method for adjusting the glass transition temperature of the thermoplastic elastomer to a temperature of -50°C or higher and 10°C or lower, a method of appropriately selecting the type of the thermoplastic elastomer, and the like may be mentioned. Incidentally, for the measurement of the glass transition temperature, DSC (temperature increase at a rate of 10°C/min) can be used.

The content of the thermoplastic elastomer with respect to 100 parts by mass of the polyvinyl acetal resin and the like in layer A is preferably 1 part by mass or more, more preferably 2 parts by mass or more, even more preferably 5 parts by mass or more, and particularly preferably 10 parts by mass or more. When the content of the thermoplastic elastomer with respect to 100 parts by mass of the polyvinyl acetal resin and the like in layer A is less than 1 part by mass, there is a tendency that sufficient light diffusibility may not be obtained. Meanwhile, from the viewpoint of obtaining an excellent total light transmittance, the content of the thermoplastic elastomer with respect to 100 parts by mass of the polyvinyl acetal resin and the like is preferably less than 100 parts by mass, more preferably less than 80 parts by mass, and even more preferably less than 60 parts by mass.

However, the response to stress at the time of applying strain of the sine waveform to a viscoelastic body is defined as complex modulus of elasticity. At this time, a difference in phase occurs between the sine wave of the strain applied and the sine wave of the stress obtainable as a response, and this phase difference is denoted as δ. Furthermore, the complex modulus of elasticity is represented by an equation using a complex number, and the real part of the complex modulus of elasticity is referred to as storage modulus, while the imaginary part is referred to as loss modulus. Particularly, in the case of measuring the dynamic viscoelastic characteristics of a viscoelastic body in the shear mode, those parameters are referred to as complex shear modulus, shear storage modulus, and shear loss modulus, respectively. When the loss modulus is divided by the storage modulus, the resultant is referred to as loss tangent and is denoted as tan δ.

It is preferable that the thermoplastic elastomer has a maximum peak of the tan δ value measured by performing a complex shear viscosity test according to JIS K 7244-10 under the conditions of a frequency of 1 Hz, at or above -50°C, more preferably at or above -25°C, and even more preferably at or above -20°C. When the temperature of the maximum peak of the tan δ is less than -50°C under the above-described conditions, the sound insulation properties of the sound insulating film before recycling near room temperature tend to deteriorate.

With regard to the thermoplastic elastomer used for the laminated sound insulating film that serves as a recycling raw material, the temperature of the maximum peak of the tan δ value measured by performing a complex shear viscosity test according to JIS K 7244-10 under the conditions of a frequency of 1 Hz is preferably 25°C or lower, more preferably 10°C or lower, even more preferably 0°C or lower, and particularly preferably -5°C or lower. When the temperature of the maximum peak of the tan δ is higher than 25°C, the sound insulation properties of the sound insulating film before recycling near room temperature tend to deteriorate. Specifically, the tan δ is measured by the method described in the Examples described below.

Regarding a method for adjusting the temperature of the maximum peak of the tan δ value measured by performing a complex shear viscosity test for the thermoplastic elastomer according to JIS K 7244-10 under the conditions of a frequency of 1 Hz, to a temperature of -50°C or higher and 25°C or lower, a method of appropriately selecting the type of the thermoplastic elastomer, and the like may be mentioned.

With regard to the thermoplastic elastomer, the height of at least one tan δ peak measured by performing a complex shear viscosity test according to JIS K 7244-10 under the conditions of a frequency of 1 Hz is preferably 0.2 or greater, more preferably 0.5 or greater, even more preferably 0.75 or greater, and particularly preferably 0.8 or greater. When the height of the tan δ peak under the above-described conditions is less than 0.2, the sound insulation properties of the laminated sound insulating film before recycling tend to decrease.

The content of the thermoplastic elastomer in layer A with respect to 100 parts by mass of the polyvinyl acetal resin and the like is preferably less than 100 parts by mass, more preferably less than 60 parts by mass, even more preferably less than 40 parts by mass, and particularly preferably less than 20 parts by mass. When the content of the thermoplastic elastomer in layer A with respect to 100 parts by mass of the polyvinyl acetal resin and the like is 100 parts by mass or more, the adhesive force of layer A to glass tends to be decreased.

The refractive index of the thermoplastic elastomer is preferably 1.490 or higher, more preferably 1.495 or higher, and even more preferably 1.500 or higher. When the refractive index of the thermoplastic elastomer is lower than 1.490, the haze of layer A tends to decrease.

The refractive index of the thermoplastic elastomer is preferably 2.000 or lower, more preferably 1.800 or lower, and even more preferably 1.600 or lower. When the refractive index of the thermoplastic elastomer is higher than 2.000, the total light transmittance of layer A tends to decrease.

The difference between the refractive index of the polyvinyl acetal resin and the like and the refractive index of the thermoplastic elastomer is preferably 0.003 or more, more preferably 0.005 or more, and even more preferably 0.01 or more. When the difference between the refractive index of the polyvinyl acetal resin and the refractive index of the thermoplastic elastomer is less than 0.003, the haze of layer A tends to decrease.

The difference between the refractive index of the polyvinyl acetal resin and the like and the refractive index of the thermoplastic elastomer is preferably 1.000 or less, more preferably 0.500 or less, and even more preferably 0.200 or less. When the difference between the refractive index of the polyvinyl acetal resin and the like and the refractive index of the thermoplastic elastomer is more than 1.000, the light transmission properties tend to deteriorate.

### (Plasticizer)

Layer A may contain a plasticizer. Regarding the plasticizer, for example, carboxylic acid ester-based plasticizers such as a monovalent carboxylic acid ester-based plasticizer and a polyvalent carboxylic acid ester-based plasticizer; a phosphoric acid ester-based plasticizer, an organic phosphorous acid ester-based plasticizer; as well as polymeric plasticizers such as a carboxylic acid polyester-based plasticizer, a carbonic acid polyester-based plasticizer, and a polyalkylene glycol-based plasticizer; and hydroxycarboxylic acid ester-based plasticizers such as an ester compound of a hydroxycarboxylic acid such as castor oil and a polyhydric alcohol, and an ester compound of a hydroxycarboxylic acid and a monohydric alcohol can be used.

The monovalent carboxylic acid ester-based plasticizer is a compound obtainable by a condensation reaction between a monovalent carboxylic acid such as butanoic acid, isobutanoic acid, hexanoic acid, 2-ethylbutanoic acid, heptanoic acid, octanoic acid, 2-ethylhexanoic acid, or lauric acid; and a polyhydric alcohol such as ethylene glycol, diethylene glycol, triethylene glycol, tetraethylene glycol, polyethylene glycol, polypropylene glycol, or glycerin. Specific examples of the compound include triethylene glycol di-2-diethylbutanoate, triethylene glycol diheptanoate, triethylene glycol di-2-ethylhexanoate, triethylene glycol dioctanoate, tetraethylene glycol di-2-ethylbutanoate, tetraethylene glycol diheptanoate, tetraethylene glycol di-2-ethylhexanoate, tetraethylene glycol dioctanoate, diethylene glycol di-2-ethylhexanoate, PEG #400 di-2-ethylhexanoate, triethylene glycol mono-2-ethylhexanoate, and a full or partial esterification product of glycerin or diglycerin and 2-ethylhexanoic acid. Here, PEG #400 represents a polyethylene glycol having an average molecular weight of 350 to 450.

The polyvalent carboxylic acid-based plasticizer may be a compound obtainable by a condensation reaction between a polyvalent carboxylic acid such as adipic acid, succinic acid, azelaic acid, sebacic acid, phthalic acid, isophthalic acid, terephthalic acid, or trimetic acid; and an alcohol having carbon number of 1 to 12, such as methanol, ethanol, butanol, hexanol, 2-ethylbutanol, heptanol, octanol, 2-ethylhexanol, decanol, dodecanol, butoxyethanol, butoxyethoxyethanol, or benzyl alcohol. Specific examples of the compound include dihexyl adipate, di-2-ethylbutyl adipate, diheptyl adipate, dioctyl adipate, di-2-ethylhexyl adipate, di(butoxyethyl) adipate, di(butoxyethoxyethyl) adipate, mono(2-ethylhexyl) adipate, dibutyl sebacate, dihexyl sebacate, di-2-ethylbutyl sebacate, dibutyl phthalate, dihexyl phthalate, di(2-ethylbutyl) phthalate, dioctyl phthalate, di(2-ethylhexyl) phthalate, benzyl butyl phthalate, and didodecyl phthalate.

The phosphoric acid-based plasticizer or phosphorous acid-based plasticizer may be a compound obtainable by a condensation reaction between phosphoric acid or phosphorous acid and an alcohol having carbon number of 1 to 12, such as methanol, ethanol, butanol, hexanol, 2-ethylbutanol, heptanol, octanol, 2-ethylhexanol, decanol, dodecanol, butoxyethanol, butoxyethoxyethanol, or benzyl alcohol. Specific examples of the compound include trimethyl phosphate, triethyl phosphate, tripropyl phosphate, tributyl phosphate, tri(2-ethylhexyl) phosphate, tri(butoxyethyl) phosphate, and tri(2-ethylhexyl) phosphite.

The carboxylic acid polyester-based plasticizer may be a carboxylic acid polyester obtainable by subjecting a polyvalent carboxylic acid such as oxalic acid, malonic acid, succinic acid, adipic acid, suberic acid, azelaic acid, sebacic acid, dodecanedioic acid, 1,2-cyclohexanedicarboxylic acid, 1,3-cyclohexanedicarboxylic acid, or 1,4-cyclohexanedicarboxylic acid; and a polyhydric alcohol such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl- 1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, or 1,4-bis(hydroxymethyl)cyclohexane, to alternating copolymerization; or may be a polymer of a hydroxycarboxylic acid (hydroxycarboxylic acid polyester), such as an aliphatic hydroxycarboxylic acid such as glycolic acid, lactic acid, 2-hydroxybutyric acid, 3-hydroxybutyric acid, 4-hydroxybutyric acid, 6-hydroxyhexanoic acid, 8-hydroxyhexanoic acid, 10-hydroxydecanoic acid, or 12-hydroxydodecanoic acid; or a hydroxycarboxylic acid having an aromatic ring, such as 4-hydroxybenzoic acid or 4-(2-hydroxyethyl)benzoic acid. The carboxylic acid polyester-based plasticizer may also be a carboxylic acid polyester obtainable by subjecting a lactone compound, such as an aliphatic lactone compound such as γ-butyrolactone, γ-valerolactone, δ-valerolactone, β-methyl-δ-valerolactone, δ-hexanolactone, ε-caprolactone, or lactide; or a lactone compound having an aromatic ring, such as phthalide, to ring-opening polymerization. The terminal structures of these carboxylic acid polyesters are not particularly limited, and the terminal structure may be a hydroxyl group or a carboxyl group, or may be an ester bond obtained by reacting a terminal hydroxyl group or a terminal carboxyl group with a monovalent carboxylic acid or a monovalent alcohol.

Examples of the carbonic acid polyester-based plasticizer include carbonic acid polyesters obtainable by subjecting a polyhydric alcohol such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, or 1,4-bis(hydroxymethyl)cyclohexane; and a carbonic acid ester such as dimethyl carbonate or diethyl carbonate, to alternating copolymerization by a transesterification reaction. The terminal structures of these carbonic acid polyester compounds may be a carbonic acid ester group, a hydroxyl group, or the like.

The polyalkylene glycol-based plasticizer may be a polymer obtainable by subjecting an alkylene oxide such as ethylene oxide, propylene oxide, butylene oxide, or oxetane to ring-opening polymerization using a monohydric alcohol, a polyhydric alcohol, a monovalent carboxylic acid, or a polyvalent carboxylic acid as an initiator.

Regarding the hydroxycarboxylic acid ester-based plasticizer, a monohydric alcohol ester of a hydroxycarboxylic acid (such as methyl ricinoleate, ethyl ricinoleate, butyl ricinoleate, methyl 6-hydroxyhexanoate, ethyl 6-hydroxyhexanoate, or butyl 6-hydroxyhexanoate), or a polyhydric alcohol ester of a hydroxycarboxylic acid [such as ethylene glycol di(6-hydroxyhexanoic acid) ester, diethylene glycol di(6-hydroxyhexanoic acid) ester, triethylene glycol di(6-hydroxyhexanoic acid) ester, 3-methyl-1,5-pentanediol di(6-hydroxyhexanoic acid) ester, 3-methyl-1,5-pentanediol di(2-hydroxybutyric acid) ester, 3-methyl-1,5-pentanediol di(3-hydroxybutyric acid) ester, 3-methyl-1,5-pentanediol di(4-hydroxybutyric acid) ester, triethylene glycol di(2-hydroxybutyric acid) ester, glycerin tri(ricinoleic acid) ester, di(1-(2-ethylhexyl)) L-tartrate, or castor oil], and other than these, a compound in which hydroxycarboxylic acid-derived groups in number of k in a polyhydric alcohol ester of a hydroxycarboxylic acid have been substituted with a carboxylic acid-derived group containing no hydroxy groups or a hydrogen atom can also be used, and as the hydroxycarboxylic acid esters, those obtained by a conventionally known method can be used.

According to the present invention, these plasticizers may be used alone, or two or more types thereof may be used in combination.

In a case in which a plasticizer is included in layer A, from the viewpoint of enhancing the compatibility between the plasticizer and the polyvinyl acetal resin and the like, and enhancing low transferability or non-transferability to other layers, it is preferable to use an ester-based plasticizer or an ether-based plasticizer, both having a melting point of 30°C or lower and a hydroxyl value of 15 mg KOH/g or more and 450 mg KOH/g or less, or an ester-based plasticizer or an ether-based plasticizer, both being amorphous and having a hydroxyl value of 15 mg KOH/g or more and 450 mg KOH/g or less. Here, the term "amorphous" represents that the melting point is not observed at a temperature of -20°C or higher. The hydroxyl value is preferably 15 mg KOH/g or greater, more preferably 30 mg KOH/g or greater, and optimally 45 mg KOH/g or greater. Furthermore, the hydroxyl value is preferably 450 mg KOH/g or less, more preferably 360 mg KOH/g or less, and optimally 280 mg KOH/g or less. Examples of the ester-based plasticizer include polyesters (the carboxylic acid polyester-based plasticizer, carbonic acid polyester-based plasticizer, and the like described above) and hydroxycarboxylic acid ester compounds (the hydroxycarboxylic acid ester-based plasticizers and the like described above), all of which satisfy the conditions described above. Examples of the ether-based plasticizer include the polyether compounds (the polyalkylene glycol-based plasticizers and the like described above) that satisfy the conditions described above.

The content of the plasticizer is preferably 50 parts by mass or less, more preferably 40 parts by mass or less, and even more preferably 30 parts by mass or less, with respect to 100 parts by mass of the polyvinyl acetal resin and the like. When the content of the plasticizer is more than 50 parts by mass with respect to 100 parts by mass of the polyvinyl acetal resin and the like, the shear storage modulus of layer A tends to be lowered. Furthermore, two or more types of plasticizers may be used in combination.

In the case of applying the interlayer film for laminated glass of the present invention to the usage where sound insulation properties and penetration resistance are especially required, the content of the plasticizer is preferably 1 part by mass or more, more preferably 4 parts by mass or more, even more preferably 6 parts by mass or more, and particularly preferably 10 parts by mass or more, with respect to 100 parts by mass of the polyvinyl acetal resin (A).

In the case of applying the interlayer film for laminated glass of the present invention to the usage where high adhesive force and rigidity are required, the content of the plasticizer is preferably 10 parts by mass or less, more preferably 6 parts by mass or less, and particularly preferably 0 part by mass (that is, no plasticizer is included).

Regarding the plasticizer, a compound having a hydroxyl group can be used, and the proportion of the content of the compound having a hydroxyl group with respect to the total amount of plasticizers used in layer A is preferably 50% by mass or more, more preferably 70% by mass or more, and even more preferably 90% by mass or more. A compound having a hydroxyl group has high compatibility with the polyvinyl acetal resin and the like and has low transferability to other resin layers, and therefore, a compound having a hydroxyl group can be suitably used.

### (Functional group-containing polyolefinic polymer)

A functional group-containing polyolefinic polymer is a product obtained by providing a polyolefinic polymer with at least one functional group selected from the group consisting of a carboxyl group, a boronic acid group, a silanol group, an epoxy group, and an isocyanate group. By further incorporating the functional group-containing polyolefinic polymer, the adhesiveness of a film obtainable by molding the resin composition with respect to glass can be increased. Furthermore, since the functional group-containing polyolefinic polymer works as a compatibilizing agent between the polyvinyl acetal resin and the like and the thermoplastic elastomer, dispersibility of the thermoplastic elastomer can be enhanced.

The carboxyl group, boronic acid group, silanol group, epoxy group, or isocyanate group, which is the functional group carried by the functional group-containing polyolefinic polymer, is preferred from the viewpoint that the groups are highly reactive with a hydroxyl group in the polyvinyl acetal resin and the like. There are no particular limitations on the method for producing the functional group-containing polyolefinic polymer; however, the polymer is obtained by subjecting, for example, an olefin and a monomer having the above-mentioned functional group to random copolymerization, block copolymerization, graft copolymerization, or a graft reaction by a known method. Among these, random copolymerization, graft copolymerization, and a graft reaction are preferred, and a graft reaction product obtainable by a graft reaction is more preferred. Here, a graft reaction product means that, as in the case of maleic anhydride modification, a product having a functional group introduced thereinto by a post-reaction of a polymer chain.

Regarding the olefin used for the functional group-containing polyolefinic polymer, propylene is preferred. A polymer obtained by copolymerizing an α-olefin other than propylene and a monomer having the above-mentioned functional group, together with propylene, may also be used. Examples of the α-olefin include ethylene, 1-butene, 1-pentene, 1-hexene, 1-octene, 4-methyl-1-pentene, and cyclohexene. The α-olefin can be copolymerized with a monomer having the above-mentioned functional group by a known method, and a method such as random copolymerization, block copolymerization, or graft copolymerization may be adopted. In a case in which a structural unit derived from one of these α-olefins other than propylene is included, the proportion of the structural unit derived from one of these α-olefins other than propylene with respect to all of the structural units is preferably more than 0 mol%, preferably 45 mol% or less, more preferably 35 mol% or less, and even more preferably 25 mol% or less.

Examples of the monomer having the above-mentioned functional group include vinyl acetate, vinyl chloride, ethylene oxide, propylene oxide, acrylamide, and an unsaturated carboxylic acid or an ester or anhydride thereof. Among them, an unsaturated carboxylic acid or an ester or anhydride thereof is preferred. Examples of the unsaturated carboxylic acid or an ester or anhydride thereof include (meth)acrylic acid, (meth)acrylic acid esters, maleic acid, maleic anhydride, fumaric acid, itaconic acid, itaconic anhydride, nadic acid, and nadic anhydride. Among them, maleic acid and maleic anhydride are more preferred. These monomers may be used alone, or two or more types thereof may be used in combination.

The functional group-containing polyolefinic polymer is preferably polypropylene containing a carboxyl group as the functional group, that is, a carboxylic acid-modified polypropylene-based resin, from the viewpoint of the adhesiveness at the interface between the polyvinyl acetal resin and the like and the thermoplastic elastomer, and a maleic acid-modified polypropylene-based resin and a maleic anhydride-modified polypropylene-based resin are more preferred.

The functional group-containing polyolefinic polymer may have a copolymerizable monomer other than an olefin copolymerized therein. Examples of the monomer copolymerizable with the olefin include acrylic acid alkyl esters such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate, and 2-ethylhexyl acrylate; and (meth)acrylic acid esters such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate, and 2-ethylhexyl methacrylate. These (meth)acrylic acid esters may be used alone, or two or more types thereof may be used in combination.

The proportion of the functional groups with respect to all of the structural units of the functional group-containing polyolefinic polymer is preferably 1 µeq/g or more, more preferably 2 µeq/g or more, and optimally 3 µeq/g or more. The proportion of the functional groups with respect to all of the structural units of the functional group-containing polyolefinic polymer is preferably 1,500 µeq/g or less, more preferably 700 µeq/g or less, and optimally 500 µeq/g or less. When the proportion of the functional groups is smaller than 1 µeq/g, the dispersed particle size of the polyolefinic resin becomes large, and turbidity of layer A tends to become intense. When the proportion is larger than 1,500 µeq/g, in a case in which the interlayer film for laminated glass is recycled, the interlayer film tends to gelate easily.

The mass ratio between the content of the functional group-containing polyolefinic polymer and the content of the thermoplastic elastomer (thermoplastic elastomer/functional group-containing polyolefinic polymer) is preferably 1/99 or higher, more preferably 50/50 or higher, even more preferably 80/20 or higher, and particularly preferably 80/20 or higher, from the viewpoint of enhancing the flexibility of a film thus obtainable. Meanwhile, from the viewpoint of increasing the total light transmittance of a film thus obtainable, the mass ratio is preferably 99.9/0.1 or lower, and more preferably 99.6/0.4 or lower.

Meanwhile, it is also acceptable to use a compound obtained by introducing at least one functional group selected from the group consisting of a carboxyl group, a boronic acid group, a silanol group, an epoxy group, and an isocyanate group into the thermoplastic elastomer (hereinafter, may be referred to as functional group-containing thermoplastic elastomer) as the functional group-containing polyolefinic polymer. In this case, using a functional group-containing thermoplastic elastomer only as the thermoplastic elastomer that constitutes the present invention may be one of suitable embodiments. A suitable amount to be adopted at the time of using a functional group-containing thermoplastic elastomer only is similar to the amount of the thermoplastic elastomer described above. In the case of using a functional group-containing thermoplastic elastomer in combination with a thermoplastic elastomer that does not contain a functional group, it is preferable that the total amount is in the range of a suitable amount for the thermoplastic elastomer.

### (Other additive components)

Regarding other components, an antioxidant, an ultraviolet absorber, a photostabilizer, an anti-blocking agent, an adhesiveness-adjusting agent, a pigment, a dye, a functional inorganic compound, a heat-shielding material (for example, inorganic heat-shielding microparticles or an organic heat-shielding material, both having an infrared absorption ability), and the like may be added as necessary.

Examples of the antioxidant include a phenolic antioxidant, a phosphorus-based antioxidant, and a sulfur-based antioxidant. Among these, a phenolic antioxidant is preferred, and an alkyl-substituted phenolic antioxidant is particularly preferred.

Examples of the phenolic antioxidant include acrylate-based compounds such as 2-t-butyl-6-(3-t-butyl-2-hydroxy-5-methylbenzyl)-4-methylphenyl acrylate, 2,4-di-t-amyl-6-(1-(3,5-di-t-amyl-2-hydroxyphenyl)ethyl)phenyl acrylate; alkyl-substituted phenolic compounds such as 2,6-di-t-butyl-4-methylphenol, 2,6-di-t-butyl-4-ethylphenol, octadecyl-3-(3,5-)di-t-butyl-4-hydroxyphenyl) propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dim ethylethyl)-2,4,8,10-tetraoxaspiro[5.5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl)propionate)meth ane, and triethylene glycol bis(3-(3-t-butyl-4-hydroxy-5-methylphenyl) propionate); and triazine-group-containing phenolic compounds such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6(4-hydroxy-3-methyl-5-t-butylanilino)-2,4-bis-octylthio-1,3,5-triazine, and 2-octylthio-4,6-bis-(3,5-di-t-butyl-4-oxyanilino)-1,3,5-triazine.

Examples of the phosphorus-based antioxidant include monophosphite-based compounds such as triphenyl phosphite, diphenyl isodecyl phosphite, phenyl diisodecyl phosphite, tris(nonylphenyl) phosphite, tris(dinonylphenyl) phosphite, tris(2-t-butyl-4-methylphenyl) phosphite, tris(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphe nanthrene-10-oxide, and 10-decyloxy-9,10-dihydro-9-oxa-10-phosphaphenanthrene; and diphosphite-based compounds such as 4,4'-butylidene-bis(3-methyl-6-t-butylphenyl-di-tridecyl phosphite), 4,4'-isopropylidene-bis(phenyl-di-alkyl (C12-C15) phosphite) 4,4'-isopropylidene-bis(diphenylmonoalkyl (C12-C15) phosphite), 1,1,3-tris(2-methyl-4-ditridecyl phosphite-5-t-butylphenyl)butane, and tetrakis(2,4-di-t-butylphenyl)-4,4'-biphenylene phosphite. Among these, a monophosphite-based compound is preferred.

Examples of the sulfur-based antioxidant include dilauryl 3,3'-thiodipropionate, distearyl 3,3-thiodipropionate, lauryl stearyl 3,3'-thiodipropionate, pentaerythritol-tetrakis(β-lauryl thiopropionate), and 3,9-bis(2-dodecylthioethyl)-2,4,8,10-tetraoxaspiro[5.5]undecane.

These antioxidants can be used alone or in combination of two or more types thereof. The amount of incorporation of the antioxidant is preferably 0.001 part by mass or more, and more preferably 0.01 part by mass or more, with respect to 100 parts by mass of the polyvinyl acetal resin and the like. Furthermore, the amount of incorporation of the antioxidant is preferably 5 parts by mass or less, and more preferably 1 part by mass or less, with respect to 100 parts by mass of the polyvinyl acetal resin and the like. When the amount of the antioxidant is less than 0.001 part by mass, sufficient effects may not be readily exhibited. Furthermore, even if the amount is more than 5 parts by mass, it is not expected to obtain any further special effect therefrom.

Furthermore, examples of the ultraviolet absorber include benzotriazole-based ultraviolet absorbers such as 2-(5-methyl-2-hydroxyphenyl)benzotriazole, 2-[2-hydroxy-3,5-bis(α,α'-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl) benzotriazole, and 2-(2'-hydroxy-5'-t-octylphenyl)benzotriazole; hindered amine-based ultraviolet absorbers such as 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-di-t-butyl-4-hydroxybenzyl )-2-n-butyl malonate, and 4-(3-(3,5-di-t-butyl-4-hydroxyphenyl)propionyloxy)-1-(2-(3-(3,5-di-t-buty 1-4-hydroxyphenyl)propionyloxy)ethyl)-2,2,6,6-tetramethylpiperidine; benzoate-based ultraviolet absorbers such as 2,4-di-t-butylphenyl-3,5-di-t-butyl-4-hydroxybenzoate, and hexadecyl-3,5-di-t-butyl-4-hydroxybenzoate; malonic acid ester compounds, and oxalic acid anilide compounds.

Examples of the malonic acid ester-based ultraviolet absorber include dimethyl 2-(p-methoxybenzylidene)malonic acid, tetraethyl-2,2-(1,4-phenylenedimethylidene), bismalonate, and 2-(p-methoxybenzylidene)-bis(1,2,2,6,6-pentamethyl-4-piperidinyl) malonate.

Examples of commercially available products of the malonic acid ester-based ultraviolet absorber include Hostavin B-CAP, Hostavin PR-25, and Hostavin PR-31 (all manufactured by Clariant, Inc.).

Examples of the oxalic acid anilide-based ultraviolet-shielding agent include oxalic acid diamides having an aryl group or the like substituted on the nitrogen atom, such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxyanilide ("Sanduvor VSU" manufactured by Clariant, Inc.).

The amount of addition of the ultraviolet absorber is preferably 10 ppm or more, and more preferably 100 ppm or more, on a mass basis with respect to the polyvinyl acetal resin and the like. Furthermore, the amount of addition of the ultraviolet absorber is preferably 50,000 ppm or less, and more preferably 10,000 ppm or less, on a mass basis with respect to the polyvinyl acetal resin and the like. The amount of addition of the ultraviolet absorber is smaller than 10 ppm, sufficient effects may not be readily exhibited. Furthermore, even if the amount of addition of the ultraviolet absorber is more than 50,000 ppm, it is not expected to obtain any special effect therefrom. These ultraviolet absorbers can be used in combination of two or more types thereof.

The photostabilizer may be a hindered amine-based agent, for example, "ADK STAB LA-57 (trade name)" manufactured by ADEKA Corporation.

If necessary, it is also possible to control the adhesiveness of layer A thus obtainable to glass or the like. Regarding the method of controlling adhesiveness, usually, a method of adding an additive that is used as an adhesiveness-adjusting agent for a laminated glass, and a method of adding various additives for adjusting adhesiveness may be mentioned. By such a method, an interlayer film for laminated glass including an adhesiveness-adjusting agent and/or various additives for adjusting adhesiveness is obtained.

Regarding the adhesiveness-adjusting agent, for example, those disclosed in WO 03/033583 A can be used, and an alkali metal salt or an alkaline earth metal salt is preferably used. Examples include salts of potassium, sodium, and magnesium. Examples of above salts include salts of organic acids, such as carboxylic acids such as octanoic acid, hexanoic acid, butyric acid, acetic acid, and formic acid; and inorganic acids such as hydrochloric acid and nitric acid.

An optimal amount of addition of the adhesiveness-adjusting agent may vary depending on the additive used; however, it is preferable to adjust the adhesiveness such that the adhesive force of layer A thus obtainable to glass generally has a value of 2 or more and to 10 or more and in Pummel test (described in WO 03/033583 A or the like). In a case in which particularly high penetration resistance is required, it is more preferable to adjust the adhesive force to be 2 or more and 6 or less, and in a case in which high glass shattering preventability is required, it is more preferable to adjust the adhesive force to be 7 or more and 10 or less. In a case in which high glass shattering preventability is required, not adding an adhesiveness-adjusting agent may be a useful method.

When inorganic heat-shielding microparticles, for example, are incorporated into layer A as a heat-shielding material, a heat-shielding function can be imparted to layer A. Examples of the heat-shielding microparticles include tin-doped indium oxide (ITO), antimony-doped tin oxide (ATO), aluminum-doped zinc oxide (AZO), a metal element complex tungsten oxide represented by General Formula: MₘWOₙ (wherein M represents a metal element; m represents a number 0.01 or greater and 1.0 or less; and n represents a number 2.2 or greater and 3.0 or less), zinc antimonite (ZnSb₂O₅), and lanthanum hexaboride. Among them, ITO, ATO, or a metal element composite tungsten oxide is preferred, and a metal element composite tungsten oxide is more preferred. Examples of the metal element represented by M in the metal element composite tungsten oxide include Cs, Tl, Rb, Na, and K, and Cs is particularly preferred. From the viewpoint of heat-shielding properties, m is preferably 0.2 or greater, and more preferably 0.3 or greater, and m is preferably 0.5 or less, and more preferably 0.4 or less.

In regard to layer A, other compounds may also be used as the heat-shielding material. Examples include compounds having phthalocyanine, naphthalocyanine, and anthracyanine skeletons, and other organic heat-shielding materials.

The content of the heat-shielding microparticles is preferably 0.1% by mass or more, and more preferably 0.2% by mass or more, with respect to the total amount of resins used in layer A. Furthermore, the content of the heat-shielding microparticles is preferably 5% by mass or less, and more preferably 3% by mass or less. When the content of the heat-shielding microparticles is more than 5% by mass, the total light transmittance may be affected. Incidentally, the average particle size of the heat-shielding microparticles is preferably 100 nm or less, and more preferably 50 nm or less. The average particle size of the heat-shielding microparticles as used herein refers to the average particle size measured with a laser diffraction apparatus.

The film thickness of layer A in a case in which layer A is a single-layer film is preferably 350 µm or more, and more preferably 700 µm or more. Furthermore, the film thickness of layer A in a case in which layer A is a single-layer film is preferably 1,600 µm or less, and more preferably 820 µm or less. When the film thickness of layer A is less than 350 µm, the strength becomes insufficient, and when the film thickness of layer A is more than 1,600 µm, the impact absorption properties at the time of collision tend to deteriorate (damage to the body increases). Furthermore, in a case in which layer A is a laminated interlayer film, the total value of the film thickness of layer A in the interlayer film is preferably 50 µm or more, more preferably 100 µm or more, and even more preferably 200 µm or more. Furthermore, the total value of the film thickness of layer A is preferably 700 µm or less, more preferably 600 µm or less, and even more preferably 500 µm or less. When the total value of the film thickness of layer A is less than 50 µm, light diffusibility tends to be insufficient, and when the total value of the film thickness of layer A is more than 700 µm, the functions of layer B (for example, sound insulation properties) tend to deteriorate.

### [Layer B]

The interlayer film for laminated glass of the present invention not only may be produced into a single-layer film of an interlayer film for laminated glass composed of layer A only, but also may be configured to have layer B, which is different from layer A, on at least one surface of layer A, or may be configured to have layer B on both surfaces of layer A.

Regarding the type of the resin that is included in layer B, in a case in which layer B is brought into direct contact with glass, the type of the resin is one or more resins selected from the group consisting of, for example, a polyvinyl acetal resin, an ionomer resin, and an ethylene-vinyl acetate copolymer resin. Furthermore, in a case in which layer B is used in a part that is not in contact with glass, examples of the resin include a thermoplastic elastomer or a plasticized polyvinyl butyral resin, both having sound insulation performance, an ionomer resin having high strength, and a PET resin that may be imparted with a function (for example, heat-shielding function or the like). Among them, it is preferable that a product obtainable by recycling a trim of a laminated sound insulating film containing PVB and a thermoplastic elastomer is used as layer A, and a thermoplastic elastomer layer similar to the original laminated sound insulating film is used as layer B between two sheets of layer A.

The film thickness of layer B is not particularly limited; however, the film thickness is preferably 20 µm or more, and more preferably 50 µm or more. Furthermore, the film thickness of layer B is preferably 500 µm or less, more preferably 300 µm or less, and even more preferably 200 µm or less. When the film thickness of layer B is less than 20 µm, there is a tendency that the functions of layer B are not easily exhibited. When the film thickness of layer B is more than 500 µm, the light diffusion ability of layer A is deteriorated, and from the viewpoint of recycling the trim, the amount of the trim (component that constitutes layer A) to be recycled is reduced, and recyclability tends to deteriorate.

The ratio of the sum of thicknesses of layer A to the sum of thicknesses of layer B (sum of thicknesses of layer A/sum of thicknesses of layer B) is preferably 1/1 or less, more preferably 1/2 or less, and even more preferably 1/3 or less. Furthermore, the ratio of the sum of thicknesses of layer A to the sum of thicknesses of layer B is preferably 1/30 or more, more preferably 1/15 or more, and even more preferably 1/5 or more. When the ratio of the sums of thicknesses is smaller than 1/30, there is a tendency that the functions of layer B (for example, sound insulation function) are not easily exhibited. Meanwhile, when the ratio of the sums of thicknesses is larger than 1/1, the proportion of layer A is relatively decreased, and the light diffusion ability of layer A is lowered. Furthermore, from the viewpoint of recycling the trim, the amount of the trim (component that constitutes layer A) to be recycled is reduced, and recyclability tends to deteriorate.

### [Layer C]

It is preferable that the interlayer film for laminated glass of the present invention has layer C that is different from layer A, between two recycled layers A. The film thickness of layer C can be made similar to that of layer B. It is preferable that the resin component included in layer C is a thermoplastic elastomer, from the viewpoint of securing translucency, sound insulation properties, and the like of the interlayer film for laminated glass. Regarding the thermoplastic elastomer, an elastomer of the type described above, or an elastomer having properties equivalent to the properties described above can be used.

### [Interlayer film for laminated glass]

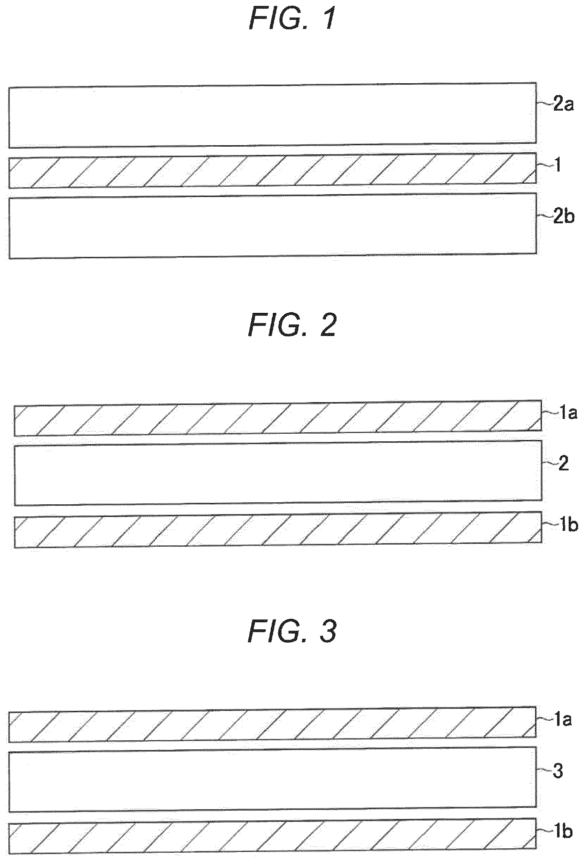

The interlayer film for laminated glass of the present invention, as explained above, may be produced into a single-layer film composed of layer A only, or may also be produced into a two-layer configuration including layer A/layer B. Furthermore, as shown in Fig. 1, the interlayer film for laminated glass may have a laminated configuration in which layer A 1 is interposed between layer B 2a and layer B 2b; as shown in Fig. 2, the interlayer film may have a laminated configuration in which layer B 2 is interposed between layer A 1a and layer A 1b; or as shown in Fig. 3, the interlayer film may have a laminated configuration in which layer C 3 is interposed between layer A 1a and layer A 1b. The laminated configuration of the interlayer film for laminated glass can be determined according to the purpose; however, when n is defined as an integer of 1 or greater, a laminated configuration of layer A/(layer B/layer A)n or layer B/(layer A/layer B)n, as well as a laminated configuration of layer A/(layer B/layer A)n/layer B, or layer B/(layer A/layer B)n/layer A may also be adopted.

Furthermore, one or more layers other than layer A, layer B, and layer C (referred to as layer D) may be included. Furthermore, the components in layer D may be identical or different. This also applies to the components in layer A, layer B, or layer C.

Incidentally, regarding layer D, a layer containing a known resin can be used, and for example, polyethylene, polypropylene, polyvinyl chloride, polystyrene, polyvinyl acetate, polyurethane, polytetrafluoroethylene, an acrylic resin, a polyamide, a polyacetal, a polycarbonate; polyethylene terephthalate and polybutylene terephthalate among polyesters; a cyclic polyolefin, polyphenylene sulfide, polytetrafluoroethylene, polysulfone, polyether sulfone, polyallylate, a liquid crystal polymer, and a polyimide can be used. It is also acceptable that additives such as a plasticizer, an antioxidant, an ultraviolet absorber, a photostabilizer, an anti-blocking agent, a pigment, a dye, a heat-shielding material (for example, inorganic heat-shielding microparticles or an organic heat-shielding material, both having an infrared absorption ability), and a functional inorganic compound may be added to layer D as necessary.

Furthermore, it is preferable that the interlayer film for laminated glass of the present invention has a concavo-convex structure formed on the surface by a conventionally known method such as melt fracture or embossing. The shape of the melt fracture or embossing is not particularly limited, and any conventionally known shape can be adopted.

Furthermore, the total film thicknesses of the interlayer film for laminated glass is preferably 100 µm or more, and more preferably 200 µm or more. Furthermore the total film thicknesses of the interlayer film for laminated glass is preferably 10,000 µm or less, and more preferably 2,000 µm or less. When the film thickness of the interlayer film for laminated glass is too thin, lamination may not be successfully achieved at the time of producing a laminated glass. When the film thickness of the interlayer film for laminated glass is too thick, the haze value becomes too high, and light transmission properties may deteriorate, or the high haze may lead to high production cost.

### [Method for producing interlayer film for laminated glass]

The method for producing an interlayer film for laminated glass is not particularly limited, and after the resin compositions that can constitute the various layers are uniformly kneaded, layer A may be produced by a known film-forming method such as an extrusion method, a calender method, a pressing method, a casting method, or an inflation method. In addition to this, it is acceptable to produce layer B, layer C, or layer D and laminate these, and it is also acceptable to mold layer A, layer B, layer C, and other necessary layers by a co-extrusion method.

Among the known film-forming methods, particularly a method of producing various layers using an extruder is suitably adopted. The resin temperature at the time of extruding is preferably 150°C or higher, and more preferably 170°C or higher. Furthermore, the resin temperature at the time of extruding is preferably 250°C or lower, and more preferably 230°C or lower. When the resin temperature is too high, the resin used undergoes decomposition, and there may be a risk for deterioration of the resin. In contrast, when the temperature is too low, discharge from the extruder is not stabilized, and this causes mechanical troubles. In order to efficiently remove volatile materials, it is preferable to remove volatile materials by pressure reduction through the vent port of the extruder.

Furthermore, regarding a method for uniformly dispersing a thermoplastic elastomer in layer A, a method of enhancing the kneading performance using a twin-screw extruder or adding a dispersant or the like may be adopted.

### [Laminated glass]

By producing a laminated glass using the interlayer film for laminated glass of the present invention, a laminated glass that can prevent lowering of the quietness inside a room by securing the sound insulation properties and can brighten the entire room by diffusing the solar light that penetrates through the laminated glass, can be provided. The interlayer film for laminated glass of the present invention can be suitably used for glass for construction, and the like.

In the laminated glass of the present invention, two sheets of glass are usually used. The thickness of the glass that constitutes the laminated glass of the present invention is preferably 100 mm or less. Furthermore, the interlayer film for laminated glass of the present invention can acquire excellent flexural strength by reducing the amount of the plasticizer with respect to 100 parts by mass of the polyvinyl acetal resin, and even if a laminated glass is produced using sheet glasses having a thickness of 2.8 mm or less, weight reduction of the laminated glass can be realized without impairing the strength of the laminated glass. From the viewpoint of weight reduction, the thickness of the glass is preferably such that at least one sheet has a thickness of 2.8 mm or less, more preferably 2.5 mm or less, even more preferably 2.0 mm or less, and particularly preferably 1.8 mm or less. Particularly, by having the thickness of one of the glass sheets adjusted to 1.8 mm or more, the thickness of the other glass sheet adjusted to 1.8 mm or less, and the difference between the thicknesses of the respective glass sheets adjusted to 0.2 mm or more, a laminated glass that realizes thickness reduction and weight reduction can be produced without impairing the flexural strength. The difference between the thicknesses of the respective glass sheets is preferably 0.5 mm or more.

In a case in which the interlayer film for laminated glass of the present invention is disposed between two sheets of float glass having a thickness of 3 mm, and thereby a laminated glass is produced, the haze is 10% or higher, preferably 15% or higher, more preferably 25% or higher, and even more preferably 35% or higher. When the haze of the laminated glass is less than 10%, the light scattering properties of the laminated glass are deteriorated.

Regarding a method for having a haze of 10% or higher in the case of producing a laminated glass using the interlayer film for laminated glass of the present invention, a method of dispersing the thermoplastic elastomer in an amount of 1 part by mass or more and less than 100 parts by mass with respect to 100 parts by mass of the polyvinyl acetal resin and the like, and a method of adjusting the refractive index of the thermoplastic elastomer to 1.490 to 2.000, and the like may be mentioned.

In a case in which the interlayer film for laminated glass of the present invention is disposed between two sheets of float glass having a thickness of 3 mm, and thereby a laminated glass is produced, the total light transmittance is 80% or higher, preferably 85% or higher, more preferably 86% or higher, and even more preferably 88% or higher. When the total light transmittance of the laminated glass is lower than 80%, the light transmission properties of the laminated glass are deteriorated.

In the case of an interlayer film including "a light absorber that absorbs visible light (a pigment, a dye, an ultraviolet absorber or near-infrared absorber other than a dye or a pigment, which has absorption in the visible light region, or the like), and/or a light reflecting agent (inorganic particles, or the like) or a light reflecting layer (multilayered film reflecting particular wavelengths), which reflects visible light", the total light transmittance specified in the present invention means the total light transmittance of an interlayer film having a composition that does not include these "light absorber, light reflecting agent, and light reflecting layer".

Regarding a method for having a total light transmittance of 80% or higher in the case of producing the laminated glass using the interlayer film for laminated glass of the present invention, a method of dispersing a thermoplastic elastomer having a refractive index of 1.400 or higher, preferably 1.440 or higher, more preferably 1.490 or higher, 2.000 or lower, preferably 1.600 or lower, and more preferably 1.520 or lower in an amount of 1 part by mass or more and less than 100 parts by mass with respect to 100 parts by mass of the polyvinyl acetal resin and the like, and in the case of incorporating a plasticizer, a method of using a plasticizer that does not easily penetrate into the thermoplastic resin, preferably a plasticizer having a hydroxyl group, and the like may be mentioned.

In a case in which the interlayer film for laminated glass of the present invention includes a heat-shielding material, it is preferable that the solar heat gain coefficient (Tts: JIS R 3106) obtainable at the time of producing a laminated glass with two sheets of float glass having a thickness of 3 mm is 65% or lower, more preferably 60% or lower, and particularly preferably 55% or lower.

### [Method for producing laminated glass]

The laminated glass of the present invention can be produced by a conventionally known method, and examples of the method include a method of using a vacuum laminator apparatus, a method of using a vacuum bag, a method of using a vacuum ring, and a method of using a nip roll. Furthermore, after temporary pressure bonding, a method of submitting the resultant laminated glass to an autoclaving process can also be additionally carried out.

In the case of using a vacuum laminator apparatus, for example, lamination is achieved using a known apparatus that is used for the production of a solar cell, under a reduced pressure of 1 × 10⁻⁶ MPa or more and 3 × 10⁻² MPa or less at a temperature of 100°C or higher and 200°C or lower, and particularly at a temperature of 130°C or higher and 170°C or lower. A method of using a vacuum bag or a vacuum ring is described in, for example, EP 1235683 B, and for example, lamination is achieved at a pressure of about 2 × 10⁻² MPa at a temperature of 130°C or more and 145°C or less.

In regard to the method for producing a laminated glass, in the case of using a nip roll, for example, a method of performing temporary pressure bonding of a first time at a temperature equal to or lower than the flow initiation temperature of a polyvinyl acetal resin, and then further performing temporary pressure bonding under conditions closer to the flow initiation temperature may be adopted. Specifically, for example, a method of heating the laminated glass at a temperature of 30°C or higher and 100°C or lower with an infrared heater or the like, subsequently performing degassing with a roll, further heating the laminated glass at a temperature of 50°C or higher and 150°C or lower, and then pressing the laminated glass with a roll to induce adhesion or temporary adhesion, may be employed.

Furthermore, it is also acceptable to produce a laminated glass by placing a glass plate coated with layer B on one surface or both surfaces of layer A and laminating the assembly, so that the laminated glass has the configuration of the interlayer film for laminated glass of the present invention inside the laminated glass.

The autoclaving process that is additionally carried out after temporary pressure bonding may vary depending on the thickness or configuration of the glass; however, for example, the autoclaving process is carried out at a pressure of 1 MPa or more and 15 MPa or less and at a temperature of 130°C or higher and 155°C or lower for a duration of from 0.5 hour to 2 hours.

There are no particular limitations on the glass used at the time of producing the laminated glass, and in addition to inorganic glasses such as float plate glass, polished plate glass, figured plate glass, wire reinforced glass, and heat-absorbing plate glass, conventionally known organic glasses of polymethyl methacrylate and polycarbonate; and the like can be used. These may be colorless, colored, transparent, or non-transparent. These may be used alone, or two or more types thereof may be used in combination.

### [Recycling of trim or out-of-specification product]

The interlayer film for laminated glass of the present invention can also be produced by, for example, melt-kneading a trim or an out-of-specification product of the interlayer film for laminated glass having a layer containing one or more resins selected from the group consisting of a polyvinyl acetal resin, an ionomer resin, and an ethylene-vinyl acetate copolymer resin and a layer containing a thermoplastic elastomer. It is preferable that the thickness of the interlayer film for laminated glass produced by recycling is adjusted to 300 to 1,600 µm.

Regarding the configuration of the interlayer film for laminated glass to be recycled, for example, a configuration having, as an outer layer, a polyvinyl acetal resin layer (may include a plasticizer) containing a composition including a polyvinyl acetal resin having a content of a vinyl alcohol unit of 15 mol% or more and 40 mol% or less; and having, as an inner layer, a thermoplastic elastomer layer containing a composition including a thermoplastic elastomer, may be mentioned.

Regarding the interlayer film for laminated glass obtainable by recycling, in a case in which the thermoplastic elastomer is a polystyrenic elastomer, it is preferable from the viewpoint of light scattering properties that the content of the styrene unit is 10% by mass or more with respect to all of the monomer units of the thermoplastic elastomer. Furthermore, in this case, it is preferable that the composition including the thermoplastic elastomer includes a functional group-containing polyolefinic polymer, from the viewpoint of the adhesiveness between glass and the interlayer film for laminated glass obtainable by recycling.

In a case in which a trim or an out-of-specification product of an interlayer film for laminated glass having a layer containing a polyvinyl acetal resin and the like and a layer containing a thermoplastic elastomer is recycled, only the interlayer film for laminated glass that is to be recycled is used to perform melt-kneading, and thus an interlayer film for laminated glass is molded. In addition to that, for example, an interlayer film for laminated glass can also be molded by performing melt-kneading after adding additional polyvinyl acetal resin and the like or an additional thermoplastic elastomer.

In a case in which fresh polyvinyl acetal resin and the like are additionally added to the interlayer film for laminated glass that is to be recycled, it is preferable that the polyvinyl acetal resin and the like are added such that the mass ratio P/Q of the additional polyvinyl acetal resin (P) with respect to the resin composition to be recycled (Q) becomes 1/99 or higher, and it is more preferable that the polyvinyl acetal resin and the like are added such that the mass ratio P/Q becomes 20/80 or higher. It is preferable that the polyvinyl acetal resin and the like are added such that the mass ratio P/Q becomes 99/1 or lower, and it is more preferable that the polyvinyl acetal resin and the like are added such that the mass ratio P/Q becomes 95/5 or lower. When the mass ratio of the resin composition to be recycled is higher than 99/1, the recycling efficiency becomes poor, and when the mass ratio of the resin composition becomes lower than 1/99, the resin is deteriorated when recycling is repeated, and this deterioration tends to cause product quality problems.

In the case of adding additional polyvinyl acetal resin and the like to the interlayer film for laminated glass to be recycled, it is preferable that a plasticizer is additionally added such that the content of the plasticizer becomes 100 parts by mass or less with respect to 100 parts by mass of the total amount of the polyvinyl acetal resin and the like in the resin composition after being recycled. The content of the plasticizer after recycling is preferably 80 parts by mass or less, more preferably 60 parts by mass or less, even more preferably 40 parts by mass or less, and particularly preferably 30 parts by mass or less, with respect to 100 parts by mass of the total amount of the polyvinyl acetal resin and the like in the resin composition after being recycled. Furthermore, in the case of additionally adding a plasticizer, the content of the plasticizer after recycling is preferably 1 part by mass or more, more preferably 4 parts by mass or less, even more preferably 5 parts by mass or less, and particularly preferably 10 parts by mass or less, with respect to 100 parts by mass of the total amount of the polyvinyl acetal resin and the like in the resin composition after being recycled.

In the case of additionally adding a fresh thermoplastic elastomer to the interlayer film for laminated glass to be recycled, it is preferable to add a thermoplastic elastomer such that the mass ratio R/Q of the thermoplastic elastomer to be added (R) and the resin composition to be recycled (Q) becomes 1/99 or higher, and it is more preferable to add the thermoplastic elastomer such that the mass ratio R/Q becomes 20/80 or higher. Furthermore, it is preferable to add the thermoplastic elastomer such that the mass ratio R/Q becomes 99/1 or lower, and it is more preferable to add the thermoplastic elastomer such that the mass ratio R/Q becomes 95/5 or lower. When the mass ratio of the resin composition is higher than 99/1, the recycling efficiency becomes poor, and when the mass ratio of the resin composition is lower than 1/99, the hue of the article obtainable by recycling may deteriorate.

Regarding the resin composition obtainable by recycling an interlayer film for laminated glass such as described above, it is preferable that the haze obtainable when the resin composition is molded into an interlayer film for laminated glass and the interlayer film is disposed between two sheets of float glass having a thickness of 3 mm, is 10% or higher, more preferably 25% or higher, and even more preferably 35% or higher. The thickness of the interlayer film for laminated glass at this time is set to 0.76 ± 0.03 mm as the standard.

Furthermore, regarding the resin composition obtainable by recycling an interlayer film for laminated glass such as described above, it is preferable that the total light transmittance obtainable when the resin composition is molded into an interlayer film for laminated glass and the interlayer film is disposed between two sheets of float glass having a thickness of 3 mm, is 80% or higher, more preferably 85% or higher, and even more preferably 86% or higher. The thickness of the interlayer film for laminated glass at this time is set to 0.76 ± 0.03 mm as the standard.

Here, in the case of an interlayer film including "a light absorber that absorbs visible light (a pigment, a dye, an ultraviolet absorber or near-infrared absorber other than a dye or a pigment, which has absorption in the visible light region, or the like), and/or a light reflecting agent (inorganic particles, or the like) or a light reflecting layer (multilayered film reflecting particular wavelengths), which reflects visible light", the total light transmittance specified in the present invention means the total light transmittance of the interlayer film having a composition that does not include these "light absorber, light reflecting agent, and light reflecting layer".

An interlayer film obtainable by recycling an interlayer film for laminated glass such as described above can be suitably used for glass panes for automobiles; sunroofs for automobiles; screen glass capable of image projection; a construction member for windows, walls, roofs, sun parlors, soundproof walls, balconies, banisters, walls, and the like; or a partition glass member for conference room and the like.

### Examples

Hereinafter, the present invention will be specifically described by way of Examples and Comparative Examples; however, the present invention is not intended to be limited to these Examples.

### [Evaluation methods]

### 1. Physical properties evaluation (tan δ peak temperature of thermoplastic elastomer)

Based on JIS K7244-10, a distortion-controlled type dynamic viscoelasticity apparatus (manufactured by Rheomix Co., Ltd., ARES) having a disc diameter of 8 mm was used as a parallel plate vibration rheometer. A single-layer sheet (thickness 0.76 mm) containing a thermoplastic elastomer used in each of Examples, Comparative Examples, and Reference Examples was used as a disc-shaped test sheet, and the gap between two sheets of flat plates was completely filled with the test sheet. Incidentally, for the test sheet, a sheet that had been stored for 24 hours or longer at a temperature of 20°C and a humidity of 60% RH was used. Vibration was applied to the test sheet at a frequency of 1 Hz at a strain amount of 1.0%, and the measurement temperature was increased from -40°C to 100°C at a constant rate of 1°C/min. The temperature of the test sheet and the discs was maintained until no change was observed in the measured values of the shear loss modulus and the shear storage modulus. In this manner, the tan δ peak temperature for the thermoplastic elastomer was measured.

### 2. Physical properties evaluation (measurement of total light transmittance and haze of laminated glass)

An interlayer film for laminated glass obtained in each of Examples, Comparative Examples, and Reference Examples was interposed between two sheets of commercially available float glass (length 50 mm × width 50 mm × thickness 3 mm), and a laminated glass was produced by a vacuum bag method (conditions: degassing under reduced pressure for 15 minutes at room temperature, heating to 120°C, maintaining for 20 minutes, and cooling). The total light transmittance and haze of the laminated glass thus produced were measured using a haze meter manufactured by Suga Test Instruments Co., Ltd.

### 3. Physical properties evaluation (evaluation of tensile fracture energy)

Furthermore, with regard to layer A used for the interlayer films for laminated glass of Examples 3 to 5 and Comparative Examples 2 to 4, an evaluation of the tensile fracture energy was carried out. Layer A was molded to have a thickness of 100 µm by hot pressing, and a specimen was obtained by cutting layer A into a size of 10 mm in width and 8 cm in length. The specimen was attached to a tensile tester at a distance between chucks of 40 mm, and measurement was made at a tensile rate of 100 mm/min. Thus, the energy (unit: J) required for fracture was evaluated as the energy per unit cross-sectional area (unit: cm²).

### [Materials used in Examples, Comparative Examples, and Reference Examples]

### (Polyvinyl acetal resin)

Polyvinyl acetal resins (polyvinyl butyral resins) used in the following Examples, Comparative Examples, and Reference Examples are shown in Table 1. Regarding these polyvinyl butyral resins (PVB), products each produced by acetalizing a polyvinyl alcohol having the same viscosity average degree of polymerization (viscosity average degree of polymerization measured based on JIS K 6726 " Testing method for polyvinyl alcohol") as the intended viscosity average degree of polymerization, using n-butylaldehyde in the presence of a hydrochloric acid catalyst.

**[Table 1]**

| | Viscosity average degree of polymerization | Average degree of acetalization (mol%) | Average content of vinyl acetate unit (mol%) | Average content of vinyl alcohol unit (mol%) | Refractive index |
|---|---|---|---|---|---|
| PVB-1 | 1000 | 70 | 1 | 29 | 1.491 |
| PVB-2 | 1000 | 78 | 1 | 21 | 1.488 |
| PVB-3 | 1000 | 64 | 1 | 35 | 1.493 |

### (Ionomer resin)

IO-1: A product obtained by kneading an ionomer (manufactured by DuPont, SentryGlas(R) Interlayer) was used.

### (Thermoplastic elastomer)

Thermoplastic elastomers used in the following Examples, Comparative Examples, and Reference Examples are shown in Table 2.

**[Table 2]**

| | Mass ratio of styrene unit and isoprene unit | Glass transition temperature (°C) | Refractive index |
|---|---|---|---|
| Elastomer 1 | 12/88 | -32°C | 1.493 |
| Elastomer 2 | 20/80 | -15°C | 1.504 |

### (Functional group-containing polyolefinic polymer)

- Maleic anhydride-modified polypropylene (manufactured by Sanyo Chemical Industries, Ltd., UMEX 1010; hereinafter, may be abbreviated to "MAN-PP")

### (Plasticizer)

- Polyester polyol (polyester diol formed made from 3-methyl-1,5-pentanediol and adipic acid; number average molecular weight per two hydroxyl groups is 500; manufactured by KURARAY CO., LTD.; hereinafter, may be abbreviated to P-510)
- Triethylene glycol di-2-ethylhexanoate (hereinafter, may be abbreviated to 3G8)

### (Example 1)

A composition obtained by mixing 100 parts by mass of PVB-1 with 49.1 parts by mass of Elastomer 1, 2.46 parts by mass of MAN-PP, and 18.1 parts by mass of P-510 and dispersing the mixture was kneaded with a LABOPLAST mill, and the resultant was molded into layer A having a thickness of 0.76 mm by hot pressing. Thus, an interlayer film for laminated glass formed from layer A was produced. The configuration of layer A and the results of evaluation of various physical properties are shown in Table 3.

### (Example 2)

An interlayer film for laminated glass formed from layer A was produced by a method in the same manner as Example 1, except that Elastomer 2 (described in Table 2) was used instead of using Elastomer 1. The configuration of layer A and the results of evaluation of various physical properties are shown in Table 3.

### (Example 3)

An interlayer film for laminated glass formed from layer A was produced by a method in the same manner as Example 1, except that PVB-2 was used instead of PVB-1 as the PVB of layer A, the amount of incorporation of Elastomer 1 was changed to 7.0 parts by mass, the amount of incorporation of MAN-PP was changed to 0.35 part by mass, and P-510 was not used. The configuration of layer A and the results of evaluation of various physical properties are shown in Table 3.

### (Example 4)

An interlayer film for laminated glass formed from layer A was produced by a method in the same manner as Example 1, except that in layer A, PVB-3 was used instead of using PVB-1, 2.0 parts by mass of Elastomer 2 was used instead of using 49.1 parts by mass of Elastomer 1, the amount of incorporation of MAN-PP was changed to 0.05 part by mass, and P-510 was not used. The configuration of layer A and the results of evaluation of various physical properties are shown in Table 3.

### (Example 5)

An interlayer film for laminated glass formed from layer A was produced by a method in the same manner as Example 4, except that in layer A, the amount of incorporation of Elastomer 2 was changed to 7.0 parts by mass, and the amount of incorporation of MAN-PP was changed to 0.35 part by mass. The configuration of layer A and the results of evaluation of various physical properties are shown in Table 3.

### (Example 6)

A composition including 7.0 parts by mass of Elastomer 1 with respect to 100 parts by mass of IO-1 was kneaded with a LABOPLAST mill, and the resultant was molded into layer A having a thickness of 0.76 mm by hot pressing. Thus, an interlayer film for laminated glass formed from layer A was produced. The configuration of layer A and the results of evaluation of various physical properties are shown in Table 3.

### (Example 7)

An interlayer film for laminated glass formed from layer A was produced in the same manner as in Example 6, except that Elastomer 2 was used instead of Elastomer 1. The configuration of layer A and the results of evaluation of various physical properties are shown in Table 3.

**[Table 3]**

| | | | Example 1 | Example 2 | Example 3 | Example 4 | Example 5 | Example 6 | Example 7 |
|---|---|---|---|---|---|---|---|---|---|
| Layer A | Thickness (mm) | | 0.76 | 0.76 | 0.76 | 0.76 | 0.76 | 0.76 | 0.76 |
| | Resin | Type | PVB-1 | PVB-1 | PVB-2 | PVB-3 | PVB-3 | IO-1 | IO-1 |
| | | Average content of vinyl alcohol unit (mol%) | 29 | 29 | 21 | 35 | 35 | - | - |
| | | Content (parts by mass) | 100 | 100 | 100 | 100 | 100 | 100 | 100 |
| | Thermoplastic elastomer | Type | Elastomer 1 | Elastomer 2 | Elastomer 1 | Elastomer 2 | Elastomer 2 | Elastomer 1 | Elastomer 2 |
| | | Content (parts by mass) | 49.1 | 49.1 | 7.0 | 2.0 | 7.0 | 7.0 | 7.0 |
| | Functional group-containing polyolefinic polymer | Type | MAN-PP | MAN-PP | MAN-PP | MAN-PP | MAN-PP | - | - |
| | | Content (parts by mass) | 2.46 | 2.46 | 0.35 | 0.05 | 0.35 | - | - |
| | Inorganic pigment | Type | - | - | - | - | - | - | - |
| | | Content (parts by mass) | - | - | - | - | - | - | - |
| | Plasticizer | Type | P-510 | P-510 | - | - | - | - | - |
| | | Content (parts by mass) | 18.1 | 18.1 | - | - | - | - | - |
| Evaluation of physical properties | Tg of thermoplastic elastomer (°C) | | -32 | -15 | -32 | -15 | -15 | -32 | -15 |
| | tan δ peak temperature of thermoplastic elastomer (°C) | | -22.6 | -5.2 | -22.6 | -5.2 | -5.2 | -22.6 | -5.2 |
| | Total light transmittance of laminated glass (%) | | 88.8 | 97.0 | 89.3 | 92.0 | 90.6 | 88.2 | 90.5 |
| | Haze of laminated glass (%) | | 36.5 | 88.7 | 18.3 | 41.6 | 49.2 | 16.0 | 36.4 |
| | Tensile fracture energy (without plasticizer) (J/cm²) | | - | - | 9.3 | 50.9 | 43.1 | - | - |

### (Comparative Example 1)

An interlayer film for laminated glass formed from layer A was produced by a method in the same manner as Example 5, except that Elastomer 1 was used instead of Elastomer 2, and 18.1 parts by mass of P-510 was used as a plasticizer. The configuration of layer A and the results of evaluation of various physical properties are shown in Table 4.

### (Comparative Example 2)

An interlayer film for laminated glass formed from layer A was produced by a method in the same manner as Example 5, except that 15.1 parts by mass of Elastomer 1 was used instead of using 7.0 parts by mass of Elastomer 2, and the amount of incorporation of MAN-PP was changed to 0.75 part by mass. The configuration of layer A and the results of evaluation of various physical properties are shown in Table 4.

### (Comparative Example 3)

An interlayer film for laminated glass formed from layer A was produced by a method in the same manner as Example 4, except that in layer A, Elastomer 2 and MAN-PP were not used, and 0.05 part by mass of titanium oxide (average particle size 1 µm) was used. The configuration of layer A and the results of evaluation of various physical properties are shown in Table 4.

### (Comparative Example 4)

An interlayer film for laminated glass formed from layer A was produced by a method in the same manner as Comparative Example 3, except that the amount of incorporation of titanium oxide in layer A was changed to 0.1 part by mass. The configuration of layer A and the results of evaluation of various physical properties are shown in Table 4.

### (Comparative Example 5)

An interlayer film for laminated glass formed from layer A was produced by a method in the same manner as Comparative Example 3, except that 18.1 parts by mass of 3G8 was used as a plasticizer for layer A. The configuration of layer A and the results of evaluation of various physical properties are shown in Table 4.

**[Table 4]**

| | | | Comparative Example 1 | Comparative Example 2 | Comparative Example 3 | Comparative Example 4 | Comparative Example 5 |
|---|---|---|---|---|---|---|---|
| Layer A | Thickness (mm) | | 0.76 | 0.76 | 0.76 | 0.76 | 0.76 |
| | Resin | Type | PVB-3 | PVB-3 | PVB-3 | PVB-3 | PVB-3 |
| | | Average content of vinyl alcohol unit (mol%) | 35 | 35 | 35 | 35 | 35 |
| | | Content (parts by mass) | 100 | 100 | 100 | 100 | 100 |
| | Thermoplastic elastomer | Type | Elastomer 1 | Elastomer 1 | - | - | - |
| | | Content (parts by mass) | 7.0 | 15.1 | - | - | - |
| | Functional group-containing polyolefinic polymer | Type | MAN-PP | MAN-PP | - | - | - |
| | | Content (parts by mass) | 0.35 | 0.75 | - | - | - |
| | Inorganic pigment | Type | - | - | TiO₂ | TiO₂ | TiO₂ |
| | | Content (parts by mass) | - | - | 0.05 | 0.10 | 0.05 |
| | Plasticizer | Type | P-510 | - | - | - | 3G8 |
| | | Content (parts by mass) | 18.1 | - | - | - | 18.1 |
| Evaluation of physical properties | Tg of thermoplastic elastomer (°C) | | -32 | -32 | - | - | - |
| | tan δ peak temperature of thermoplastic elastomer (°C) | | -22.6 | -22.6 | - | - | - |
| | Total light transmittance of laminated glass (%) | | 87.3 | 87.4 | 75.9 | 67.7 | 85.0 |
| | Haze of laminated glass (%) | | 1.5 | 2.4 | 22.1 | 38.6 | 6.5 |
| | Tensile fracture energy (without plasticizer) (J/cm²) | | - | 15.0 | 5.4 | 5.8 | - |

### (Reference Example 1)

In a first extruder, 18.1 parts by mass of KURARAY POLYOL P-510 was added to 100 parts by mass of PVB-3, and in a second extruder, 5 parts by mass of MAN-PP was added to 100 parts by mass of Elastomer 1. These were co-extruded to form a film, and thus an interlayer film for laminated glass having a three-layer configuration, in which a layer containing PVB and having a thickness of 0.35 mm constituted an outer layer, and a layer containing an elastomer and having a thickness of 0.05 mm constituted an inner layer, was obtained. The optical characteristics (total light transmittance and haze of laminated glass) were evaluated in the same manner as in Example 1, using this interlayer film. The evaluation results are shown in Table 5.

### (Reference Example 2)

An interlayer film for laminated glass having a three-layer configuration was obtained in the same manner as in Reference Example 1, except that Elastomer 2 was used instead of Elastomer 1. Optical characteristics were evaluated in the same manner as in Example 1, using this interlayer film. The evaluation results are shown in Table 5.

### (Example 8) (Layer A obtained by recycling)

The laminated interlayer film having a three-layer configuration obtained in Reference Example 1 was finely cut, and the pieces were melt-kneaded with a LABOPLAST mill. Subsequently, layer A having a thickness of 0.76 mm was obtained by hot pressing. Optical characteristics were evaluated in the same manner as in Example 1, using this layer A. The evaluation results are shown in Table 6.

### (Comparative Example 6) (Layer A obtained by recycling)

Optical characteristics were evaluated in the same manner as in Example 7, except that the laminated interlayer film having a three-layer configuration obtained in Reference Example 2 was used. The evaluation results are shown in Table 6.

### (Example 9) (Three-layered laminated interlayer film having layer A obtained by recycling as outer layer)

Layer A was obtained in the same manner as in Example 8, except that the thickness was changed to 0.35 mm. Furthermore, a composition obtained by adding 5 parts of MAN-PP to 100 parts by mass of Elastomer 2 and melt-kneading the mixture with a LABOPLAST mill was processed by hot pressing, and thus layer C having a thickness of 0.1 mm was obtained. Next, the layers were stacked in the order of layer A/layer C/layer A, and was compressed by hot pressing. Thus, a laminated interlayer film having a three-layer configuration and having a thickness of 0.8 mm was obtained. Optical characteristics were evaluated in the same manner as in Example 1, using this laminated interlayer film. The evaluation results are shown in Table 6.

### (Example 10) (Three-layered laminated interlayer film having layer A obtained by recycling as inner layer)

Layer A was obtained in the same manner as in Example 8, except that the thickness was changed to 0.35 mm. Furthermore, 18.1 parts by mass of P-510 was added to 100 parts by mass of PVB-1, the mixture was melt-kneaded with a LABOPLAST mill, and layer B having a thickness of 0.2 mm was obtained by hot pressing. Next, the layers were stacked in the order of layer B/layer A/layer B, and then was compressed by hot pressing, and thus a laminated interlayer film having a three-layer configuration and having a thickness of 0.75 mm was obtained. Optical characteristics were evaluated in the same manner as in Example 1, using this laminated interlayer film. The evaluation results are shown in Table 6.

**[Table 5]**

| | | | Reference Example 1 | Reference Example 2 |
|---|---|---|---|---|
| Outer layer | Thickness (mm) | | 0.35 | 0.35 |
| | Resin | Type | PVB-3 | PVB-3 |
| | | Average content of vinyl alcohol unit (mol%) | 35 | 35 |
| | | Content (parts by mass) | 100 | 100 |
| | Plasticizer | Type | P-510 | P-510 |
| | | Content (parts by mass) | 18.1 | 18.1 |
| Inner layer | Thickness (mm) | | 0.05 | 0.05 |
| | Thermoplastic elastomer | Type | Elastomer 1 | Elastomer 2 |
| | | Content (parts by mass) | 100 | 100 |
| | Functional group-containing polyolefinic polymer | Type | MAN-PP | MAN-PP |
| | | Content (parts by mass) | 5.0 | 5.0 |
| Evaluation of physical properties | Total light transmittance of laminated glass (%) | | 87.4 | 87.7 |
| | Haze of laminated glass (%) | | 0.7 | 0.6 |

**[Table 6]**

| | | Example 8 | Comparative Example 6 | Example 9 | Example 10 |
|---|---|---|---|---|---|
| Evaluation of physical properties | Total light transmittance of laminated glass (%) | 92.6 | 87.0 | 92.3 | 89.3 |
| | Haze of laminated glass (%) | 47.5 | 1.5 | 57.9 | 24.9 |

### Reference Signs List

- 1: Layer A
- 1a: Layer A
- 1b: Layer A
- 2: Layer B
- 2a: Layer B
- 2b: Layer B
- 3: Layer C

## Claims

1. An interlayer film for laminated glass, comprising layer A containing one or more resins selected from the group consisting of a polyvinyl acetal resin, an ionomer resin, and an ethylene-vinyl acetate copolymer resin; and a thermoplastic elastomer,
wherein the thermoplastic elastomer is dispersed in layer A, and
when a laminated glass is produced by disposing the interlayer film for laminated glass between two sheets of float glass having a thickness of 3 mm, the laminated glass has a haze of 10% or higher and a total light transmittance of 80% or higher.

2. The interlayer film for laminated glass according to claim 1, wherein a glass transition temperature of the thermoplastic elastomer is 10°C or lower.

3. The interlayer film for laminated glass according to claim 1 or 2, wherein a content of the thermoplastic elastomer with respect to 100 parts by mass of the resin in layer A is less than 100 parts by mass.

4. The interlayer film for laminated glass according to any one of claims 1 to 3, wherein a temperature of a maximum peak of the tan δ measured by performing a complex shear viscosity test for the thermoplastic elastomer according to JIS K 7244-10 under the conditions of a frequency of 1 Hz is -50°C to 25°C.

5. The interlayer film for laminated glass according to any one of claims 1 to 4, wherein layer A contains a plasticizer having a hydroxyl group.

6. The interlayer film for laminated glass according to any one of claims 1 to 5, comprising layer B on at least one surface of layer A, layer B being different from layer A.

7. The interlayer film for laminated glass according to claim 6, comprising layer B on both surfaces of layer A.

8. The interlayer film for laminated glass according to claim 6 or 7, wherein layer B contains one or more resins selected from the group consisting of a polyvinyl acetal resin, an ionomer-based resin, and an ethylene-vinyl acetate copolymer resin.

9. The interlayer film for laminated glass according to any one of claims 1 to 5, comprising layer C between two layers of layer A, layer C being different from layer A.

10. The interlayer film for laminated glass according to claim 9, wherein layer C contains a thermoplastic elastomer.

11. The interlayer film for laminated glass according to any one of claims 1 to 10, wherein the thermoplastic elastomer is a styrene/diene based elastomer or an acrylic elastomer.

12. The interlayer film for laminated glass according to any one of claims 1 to 11, wherein the thermoplastic elastomer has a refractive index of 1.490 to 2.000.

13. The interlayer film for laminated glass according to any one of claims 1 to 12, wherein layer A contains a functional group-containing polyolefinic polymer.

14. A laminated glass comprising the interlayer film for laminated glass according to any one of claims 1 to 13.

15. A method for producing the interlayer film for laminated glass according to any one of claims 1 to 14, the method comprising:
a step of producing layer A by melt-kneading a laminated interlayer film having at least one layer of each of a layer containing a thermoplastic elastomer and a layer containing a resin selected from the group consisting of a polyvinyl acetal resin, an ionomer resin, and an ethylene-vinyl acetate copolymer.
